(19) **Europäisches Patentamt European Patent Office Office européen des brevets**

(11) **EP 4 201 035 B1**

(12) **EUROPEAN PATENT SPECIFICATION**

(45) Date of publication and mention
of the grant of the patent:
**25.12.2024 Bulletin 2024/52**

(21) Application number: **21773917.6**

(22) Date of filing: **13.08.2021**

(51) International Patent Classification (IPC):
***H04L 41/16*** (2022.01)  ***H04L 41/0806*** (2022.01)

(52) Cooperative Patent Classification (CPC):
**H04L 41/16; H04L 41/0806**

(86) International application number:
**PCT/US2021/045998**

(87) International publication number:
**WO 2022/040048 (24.02.2022 Gazette 2022/08)**

(54) **CONFIGURATION CONSIDERATIONS FOR CHANNEL STATE INFORMATION**

KONFIGURATIONSASPEKTE FÜR KANALSTATUSINFORMATIONEN

CONSIDÉRATIONS DE CONFIGURATION POUR INFORMATIONS D'ÉTAT DE CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.08.2020 GR 20200100494**

(43) Date of publication of application:
**28.06.2023 Bulletin 2023/26**

(73) Proprietor: **QUALCOMM INCORPORATED**
San Diego, California 92121-1714 (US)

(72) Inventors:
• **VITTHALADEVUNI, Pavan Kumar**
San Diego, California 92121 (US)
• **MANOLAKOS, Alexandros**
San Diego, California 92121 (US)
• **YOO, Taesang**
San Diego, California 92121 (US)
• **BHUSHAN, Naga**
San Diego, California 92121 (US)
• **NAMGOONG, June**
San Diego, California 92121 (US)
• **SUNDARARAJAN, Jay Kumar**
San Diego, California 92121 (US)
• **MUKKAVILLI, Krishna Kiran**
San Diego, California 92121 (US)
• **JI, Tingfang**
San Diego, California 92121 (US)

(74) Representative: **Tomkins & Co
5 Dartmouth Road
Dublin 6, D06 F9C7 (IE)**

(56) References cited:
**EP-A1- 3 418 821  WO-A1-2019/172813**

## Description

### INTRODUCTION

The present disclosure relates generally to communication systems, and more particularly, to a method of wireless communication to configure a neural network training for channel state information.

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

EP 3 418 821 A1 discloses a method for configuring a data transmission system, the method comprising: training a machine learning model of the data transmission system, wherein the machine learning model specifies at least a transmitter model, a channel model, and a receiver model including a receiver neural network, configuring a transmitter and a receiver based on the trained machine learning model, then: obtaining training data specifying a set of messages sent by the transmitter and the corresponding signals received by the receiver, training the receiver model based on the obtained training data, and configuring the receiver based on the trained receiver model.

### BRIEF SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. The invention is defined in the independent claims, to which reference should now be made. Advantageous embodiments are set out in the dependent claims.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.

FIG. 4A is a diagram illustrating an example of an encoding device and a decoding device that use previously stored channel state information, in accordance with various aspects of the present disclosure.

FIG. 4B is a diagram illustrating an example associated with an encoding device and a decoding device, in accordance with various aspects of the present disclosure.

FIGs. 5-8 are diagrams illustrating examples associated with encoding and decoding a data set using a neural network for uplink communication, in accordance with various aspects of the present disclosure.

FIGs. 9 and 10 are diagrams illustrating example processes associated with encoding a data set using a neural network for uplink communication, in accordance with various aspects of the present disclosure.

FIG. 11 is a call-flow diagram of wireless communication.

FIG. 12 is a flowchart of a method of wireless communication.

FIG. 13 is a flowchart of a method of wireless communication.

FIG. 14 is a flowchart of a method of wireless communication.

FIG. 15 is a flowchart of a method of wireless communication.

FIG. 16 is a diagram illustrating an example of a hardware implementation for an example apparatus.

FIG. 17 is a diagram illustrating an example of a hardware implementation for an example apparatus.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

An encoding device operating in a network may measure reference signals and/or the like to report to a network entity. For example, the encoding device may measure reference signals during a beam management process for channel state feedback (CSF), may measure received power of reference signals from a serving cell and/or neighbor cells, may measure signal strength of inter-radio access technology (e.g., WiFi) networks, may measure sensor signals for detecting locations of one or more objects within an environment, and/or the like. However, reporting the measurement information to the base station may consume communication and/or network resources.

In some aspects described herein, an encoding device (e.g., a UE, a base station, a transmit receive point (TRP), a network device, a low-earth orbit (LEO) satellite, a medium-earth orbit (MEO) satellite, a geostationary earth orbit (GEO) satellite, a high elliptical orbit (HEO) satellite, and/or the like) may train one or more neural networks to learn dependence of measured qualities on individual parameters, isolate the measured qualities through various layers of the one or more neural networks (also referred to as "operations"), and compress measurements in a way that limits compression loss. In some aspects, the encoding device may use a nature of a quantity of bits being compressed to construct a process of extraction and compression of each feature (also referred to as a dimension) that affects the quantity of bits. In some aspects, the quantity of bits may be associated with sampling of one or more reference signals and/or may indicate channel state information. For example, the encoding device may encode measurements, to produce compressed measurements, using one or more extraction operations and compression operations associated with a neural network with the one or more extraction operations and compression operations being based at least in part on a set of features of the measurements.

The encoding device may transmit the compressed measurements to a network entity, such as server, a TRP, another UE, a base station, and/or the like. Although examples described herein refer to a base station as the decoding device, the decoding device may be any network entity. The network entity may be referred to as a "decoding device."

The decoding device may decode the compressed measurements using one or more decompression operations and reconstruction operations associated with a neural network. The one or more decompression and reconstruction operations may be based at least in part on a set of features of the compressed data set to produce reconstructed measurements. The decoding device may use the reconstructed measurements as channel state information feedback.

A UE may train the neural network to perform one or more of a wireless channel compression at the UE, a wireless channel measurement at the UE, a wireless interference measurement at the UE, UE positioning, wireless waveform determination at the UE, etc. When training the neural network at the UE, the UE may selectively train a subset of the layers or neural networks that are affected. According to some aspects of the disclosure, a network entity may configure one or more parameters for neural network training at the UE, and UE may selectively train the neural network.

While aspects and implementations are described in this application by illustration to some examples, those skilled in the art will understand that additional implementations and use cases may come about in many different arrangements and scenarios. Aspects described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described aspects may occur. Implementations may range a spectrum from chip-level or modular components to non-modular, non-chip-level implementations and further to aggregate, distributed, or original equipment manufacturer (OEM) devices or systems incorporating one or more aspects of the described aspects. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that aspects described herein may be practiced in a wide variety of devices, chip-level components, systems, distributed arrangements, aggregated or disaggregated components, end-user devices, etc. of varying sizes, shapes, and constitution.

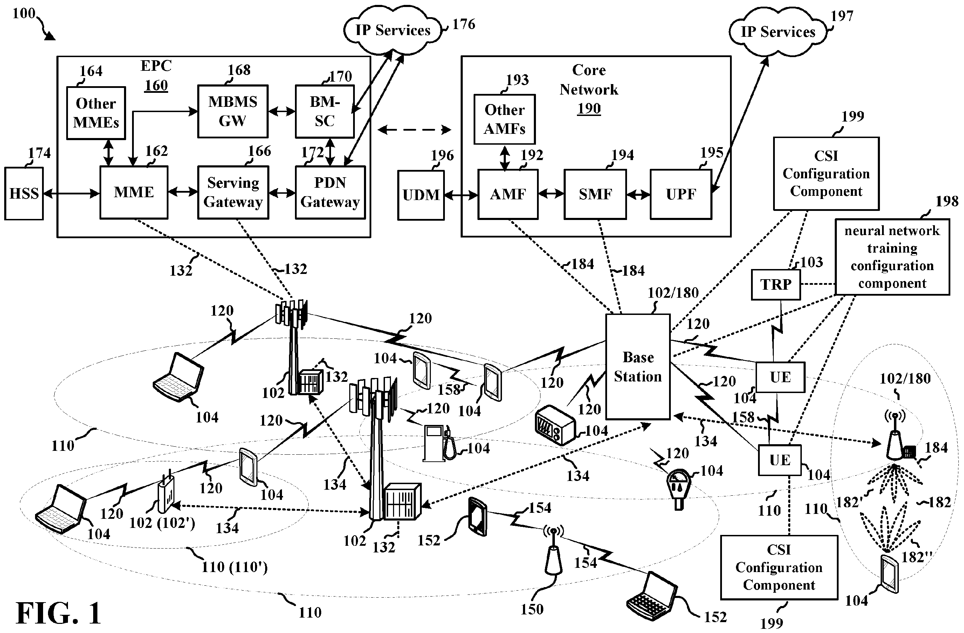

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-in put and multiple-output (MIMO) antenna technology, including spatial multiplexing, beamforming, and/or transmit diversity. The communication links may be through one or more carriers. The base stations 102 / UEs 104 may use spectrum up to Y MHz (e.g., 5, 10, 15, 20, 100, 400, etc. MHz) bandwidth per carrier allocated in a carrier aggregation of up to a total of Yx MHz (x component carriers) used for transmission in each direction. The carriers may or may not be adjacent to each other. Allocation of carriers may be asymmetric with respectto DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicens e d frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referredto (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UEIP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referredto as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

Referring again to FIG. 1, in certain aspects, a UE 104, or other encoding device, may include a CSI configuration component 198 configured to receive a configuration from a wireless network entity for one or more neural network training parameters for wireless communication by the UE, and train the neural network based on the configuration received from the wireless network entity. In certain aspects, a base station 102, 180, a TRP 103, another UE 104, or other decoding device may include a CSI configuration component 199 configured to detect one or more parameters for neural network training for wireless communication by a UE, and transmit, to the UE, a configuration for the one or more neural network training parameters for wireless communication by the UE. Although the following description may be focused on 5G NR, the concepts described herein may be applicable to other similar areas, such as LTE, LTE-A, CDMA, GSM, and other wireless technologies.

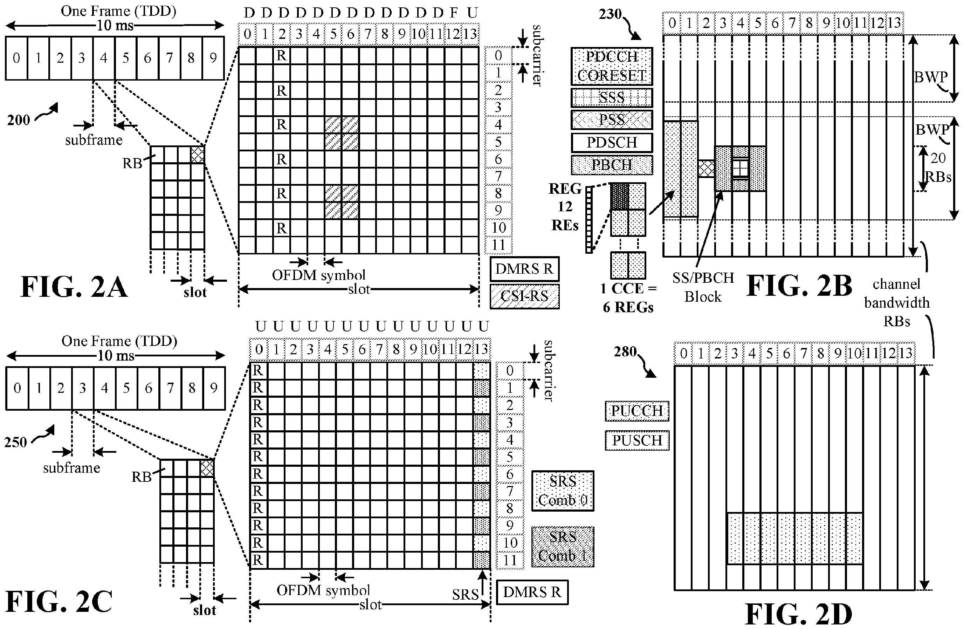

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| $\mu$ | **SCS** $\Delta f = 2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies $\mu$ 0 to 4 allow for 1, 2, 4, 8, and 16 slots, respectively, per subframe. For extended CP, the numerology 2 allows for 4 slots per subframe. Accordingly, for normal CP and numerology $\mu$, there are 14 symbols/slot and $2^{\mu}$ slots/subframe. The subcarrier spacing may be equal to $2^{\mu} \ast$ 15 kHz, where $\mu$ is the numerology 0 to 4. As such, the numerology $\mu$=0 has a subcarrier spacing of 15 kHz and the numerology $\mu$=4 has a subcarrier spacing of 240 kHz. The symbol length/duration is inversely related to the subcarrier spacing. FIGs. 2A-2D provide an example of normal CP with 14 symbols per slot and numerology $\mu$=2 with 4 slots per subframe. The slot duration is 0.25 ms, the subcarrier spacing is 60 kHz, and the symbol duration is approximately 16.67 $\mu$s. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)). The PUSCH carries data, and may additionally be used to carry a buffer status report (BSR), a power headroom report (PHR), and/or UCI.

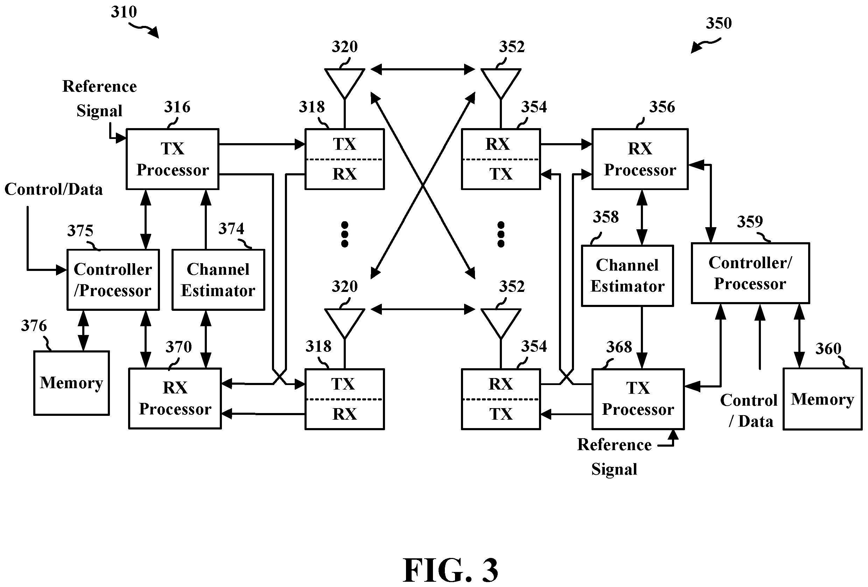

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate a radio frequency (RF) carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with 198 of FIG. 1. At least one of the TX processor 316, the RX processor 370, and the controller/processor 375 may be configured to perform aspects in connection with 199 of FIG. 1.

A wireless receiver may provide various types of channel state information (CSI) to a transmitting device. Among other examples, a UE may perform measurements on downlink signals, such as reference signal, from a base station and may provide a CSI report including any combination of a channel quality indicator (CQI), a precoding matrix indicator (PMI), a rank indicator (RI), a synchronization signal block/physical broadcast channel resource block indicator (SSBRI), a layer indicator (LI). The UE may perform the measurements and determine the CSI based on one or more channel state information reference signals (CSI-RS), SSB, channel state information interference measurement (CSI-IM) resources, etc. received from the base station. The base station may configure the UE to perform the CSI measurements, e.g., with a CSI measurement configuration. The base station may configure the UE with a CSI resource configuration that indicates the type of reference signal, e.g., a non-zero power CSI-RS (NZP CSI-RS), SSB, CSI-IM resource, etc. The base station may configure the UE with a CSI report configuration that indicates a mapping between the configured CSI measurements and the configured CSI resources and indicates for the UE to provide a CSI report to the base station.

There may be different types of CSI. A first type of CSI (which may be referred to as Type I CSI) may be fore beam selection in which the UE selects a set of one or more beams indices (e.g., of beams 182' or 182") having better channel measurements and transmits CSI information for the set of beams to the base station.

A second type of CSI (which may be referred to as a Type II CSI) may be for beam combinations of a set of beams. The UE may determine better linear combination coefficients of various beams (e.g., of beams 182' or 182") and may transmit the beam indices for the set of beams as well as the coefficients for combining the beams. The UE may provide the coefficients for the beam combinations on a per sub-band basis. For example, the UE may provide the Type II CSI for each configured sub-band.

The present application provides for an additional type of CSI that uses machine learning or one or more neural networks to compress a channel and feedback the channel to the base station. The CSI may be referred to as a neural network based CSI, for example, or by other names. The CSI may use machine learning or one or more neural networks to measure and provide feedback about interference observed at the UE. The feedback may be provided to a base station, for example, for communication over an access link. In other examples, the feedback may be provided to a TRP or to another UE (e.g., for sidelink communication).

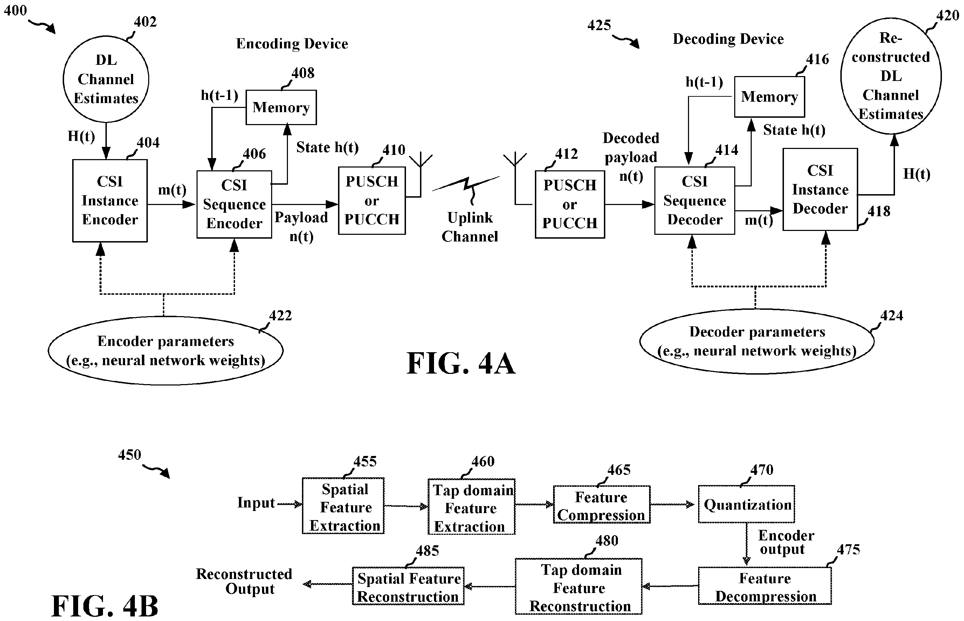

FIG. 4A illustrates an example architecture of components of an encoding device 400 and a decoding device 425 that use previously stored CSI, in accordance with aspects of the present disclosure. In some examples, the encoding device 400 may be a UE (e.g., 104 or 350), and the decoding device 425 may be a base station (e.g., 102, 180, 310), a TRP (e.g., TRP 103), another UE (e.g., UE 104), etc. The encoding device 400 and the decoding device 425 may save and use previously stored CSI and may encode and decode a change in the CSI from a previous instance. This may provide for less CSI feedback overhead and may improve performance. The encoding device 400 may also be able to encode more accurate CSI, and neural networks may be trained with the more accurate CSI. The example architecture of the encoding device 400 and the decoding device 425 may be used for the determination, e.g., computation, of CSI and provision of feedback from the encoding device 400 to the decoding device 425 including processing based on a neural network or machine learning.

As illustrated at 402, the encoding device 400 measures downlink channel estimates based on downlink signals from the base station, such as CSI-RS, SSB, CSI-IM resources, etc., that is input for encoding. A downlink channel estimate instance at time t is represented as H(t) and is provided to a CSI instance encoder 404 that encodes the single CSI instance for time t and outputs the encoded CSI instance for time t as m(t) to a CSI sequence encoder 406. The CSI sequence encoder 406 may take Doppler into account.

As shown in FIG. 4A, the CSI instance encoder 404 may encode a CSI instance into intermediate encoded CSI for each DL channel estimate in a sequence of DL channel estimates. The CSI instance encoder 404 (e.g., a feedforward network) may use neural network encoder weights $\theta$ from Encoder parameters 422. The intermediate encoded CSI may be represented as $m(t) \triangleq f_{enc,\theta}\big(H(t)\big)$. The CSI sequence encoder 406 may be based on a long short term memory (LSTM) network, whereas the CSI instance encoder 404 may be based on a feedforward network. In other examples, the CSI sequence encoder 406 may be based on a gated recursive unit network or a recursive unit network. The CSI sequence encoder 406 (e.g., a Long Short-Term Memory (LSTM) network) may determine a previously encoded CSI instance $h(t\text{-}1)$ from memory 408 and compare the intermediate encoded CSI $m(t)$ and the previously encoded CSI instance $h(t\text{-}1)$ to determine a change $n(t)$ in the encoded CSI. The change $n(t)$ may be a part of a channel estimate that is new and may not be predicted by the decoding device. The encoded CSI at this point may be represented by $[n(t), h_{enc}(t)] \triangleq g_{enc,\theta}\big(m(t), h_{enc}(t-1)\big)$. CSI sequence encoder 406 may provide this change $n(t)$ on the physical uplink shared channel (PUSCH) or the physical uplink control channel (PUCCH) 410, and the encoding device may transmit the change (e.g., information indicating the change) $n(t)$ as the encoded CSI on the UL channel to the decoding device. Because the change is smaller than an entire CSI instance, the encoding device may send a smaller payload for the encoded CSI on the UL channel, while including more detailed information in the encoded CSI for the change. CSI sequence encoder 406 may generate encoded CSI $h(t)$ based at least in part on the intermediate encoded CSI $m(t)$ and at least a portion of the previously encoded CSI instance $h(t\text{-}1)$. CSI sequence encoder 406 may save the encoded CSI $h(t)$ in memory 408.

CSI sequence decoder 414 may receive encoded CSI on the PUSCH or PUCCH 412. CSI sequence decoder 414 may determine that only the change $n(t)$ of CSI is received as the encoded CSI. CSI sequence decoder 414 may determine an intermediate decoded CSI $m(t)$ based at least in part on the encoded CSI and at least a portion of a previous intermediate decoded CSI instance $h(t\text{-}1)$ from memory 416 and the change. CSI instance decoder 418 may decode the intermediate decoded CSI $m(t)$ into decoded CSI. CSI sequence decoder 414 and CSI instance decoder 418 may use neural network decoder weights $\phi$ from decoder parameters 424. The intermediate decoded CSI may be represented by $[\widehat{m}(t), h_{dec}(t)] \triangleq g_{dec,\phi}\big(n(t), h_{dec}(t-1)\big)$. CSI sequence decoder 414 may generate decoded CSI $h(t)$ based at least in part on the intermediate decoded CSI $m(t)$ and at least a portion of the previously decoded CSI instance $h(t\text{-}1)$. At 420, the decoding device may reconstruct a DL channel estimate from the decoded CSI $h(t)$, and the reconstructed channel estimate may be represented as $\hat{H}(t) \triangleq f_{dec,\phi}(\hat{m}(t))$. CSI sequence decoder 414 may save the decoded CSI $h(t)$ in memory 416.

Because the change $n(t)$ is smaller than an entire CSI instance, the encoding device may send a smaller payload on the UL channel. For example, if the DL channel has changed little from previous feedback, due to a low Doppler or little movement by the encoding device, an output of the CSI sequence encoder may be rather compact. In this way, the encoding device may take advantage of a correlation of channel estimates over time. In some aspects, because the output is small, the encoding device may include more detailed information in the encoded CSI for the change. In some aspects, the encoding device may transmit an indication (e.g., flag) to the decoding device that the encoded CSI is temporally encoded (a CSI change). Alternatively, the encoding device may transmit an indication that the encoded CSI is encoded independently of any previously encoded CSI feedback. The decoding device may decode the encoded CSI without using a previously decoded CSI instance. In some aspects, a device, which may include the encoding device or the decoding device, may train a neural network model using a CSI sequence encoder and a CSI sequence decoder.

In some aspects, CSI may be a function of a channel estimate (referred to as a channel response) $H$ and interference $N$. There may be multiple ways to convey $H$ and $N$. For example, the encoding device may encode the CSI as $N^{-1/2}H$. The encoding device may encode $H$ and $N$ separately. The encoding device may partially encode $H$ and $N$ separately, and then jointly encode the two partially encoded outputs. Encoding $H$ and $N$ separately maybe advantageous. Interference and channel variations may happen on different time scales. In a low Doppler scenario, a channel may be steady but interference may still change faster due to traffic or scheduler algorithms. In a high Doppler scenario, the channel may change faster than a scheduler-grouping of UEs. In some aspects, a device, which may include the encoding device or the decoding device, may train a neural network model using separately encoded $H$ and $N$.

In some aspects, a reconstructed DL channel $\hat{H}$ may faithfully reflect the DL channel H, and this may be called explicit feedback. In some aspects, $\hat{H}$ may capture only that information required for the decoding device to derive rank and precoding. CQI may be fed back separately. CSI feedback may be expressed as $m$(t), or as $n$(t) in a scenario of temporal encoding. Similar to Type-II CSI feedback, $m$(t) may be structured to be a concatenation of rank index (RI), beam indices, and coefficients representing amplitudes or phases. In some aspects, $m$(t) may be a quantized version of a real-valued vector. Beams may be pre-defined (not obtained by training), or may be a part of the training (e.g., part of $\theta$ and $\phi$ and conveyed to the encoding device or the decoding device).

In some aspects, the decoding device and the encoding device may maintain multiple encoder and decoder networks, each targeting a different payload size (for varying accuracy vs. UL overhead tradeoff). For each CSI feedback, depending on a reconstruction quality and an uplink budget (e.g., PUSCH payload size), the encoding device may choose, or the decoding device may instruct the encoding device to choose, one of the encoders to construct the encoded CSI. The encoding device may send an index of the encoder along with the CSI based at least in part on an encoder chosen by the encoding device. Similarly, the decoding device and the encoding device may maintain multiple encoder and decoder networks to cope with different antenna geometries and channel conditions. Note that while some operations are described for the decoding device and the encoding device, these operations may also be performed by another device, as part of a preconfiguration of encoder and decoder weights and/or structures.

As indicated above, FIG. 4A may be provided as an example. Other examples may differ from what is described with regard to FIG. 4A.

Based at least in part on encoding and decoding a data set using a neural network for uplink communication, the encoding device may transmit CSF with a reduced payload. This may conserve network resources that may otherwise have been used to transmit a full data set as sampled by the encoding device.

FIG. 4B is a diagram illustrating an example 450 associated with encoding and decoding a data set using a neural network for uplink communication, in accordance with various aspects of the present disclosure. An encoding device (e.g., UE 104, encoding device 400, and/or the like) may be configured to perform one or more operations on samples (e.g., data) received via one or more antennas of the encoding device 400 to compress the samples. A decoding device 425 (e.g., base station 102 or 180, decoding device 425, and/or the like) may be configured to decode the compressed samples to determine information, such as CSF.

In some aspects, the encoding device may identify a feature to compress. In some aspects, the encoding device may perform a first type of operation in a first dimension associated with the feature to compress. The encoding device may perform a second type of operation in other dimensions (e.g., in all other dimensions). For example, the encoding device may perform a fully connected operation on the first dimension and convolution (e.g., pointwise convolution) in all other dimensions.

In some aspects, the reference numbers identify operations that include multiple neural network layers and/or operations. Neural networks of the encoding device and the decoding device may be formed by concatenation of one or more of the referenced operations.

As shown by reference number 455, the encoding device may perform a spatial feature extraction on the data. As shown by reference number 460, the encoding device may perform a tap domain feature extraction on the data. In some aspects, the encoding device may perform the tap domain feature extraction before performing the spatial feature extraction. In some aspects, an extraction operation may include multiple operations. For example, the multiple operations may include one or more convolution operations, one or more fully connected operations, and/or the like, that may be activated or inactive. In some aspects, an extraction operation may include a residual neural network (ResNet) operation.

As shown by reference number 465, the encoding device may compress one or more features that have been extracted. In some aspects, a compression operation may include one or more operations, such as one or more convolution operations, one or more fully connected operations, and/or the like. After compression, a bit count of an output may be less than a bit count of an input.

As shown by reference number 470, the encoding device may perform a quantization operation. In some aspects, the encoding device may perform the quantization operation after flattening the output of the compression operation and/or performing a fully connected operation after flattening the output.

As shown by reference number 475, the decoding device may perform a feature decompression. As shown by reference number 480, the decoding device may perform a tap domain feature reconstruction. As shown by reference number 485, the decoding device may perform a spatial feature reconstruction. In some aspects, the decoding device may perform spatial feature reconstruction before performing tap domain feature reconstruction. After the reconstruction operations, the decoding device may output the reconstructed version of the encoding device's input.

In some aspects, the decoding device may perform operations in an order that is opposite to operations performed by the encoding device. For example, if the encoding device follows operations (*a, b,* c, *d*), the decoding device may follow inverse operations (*D, C*, *B, A*). In some aspects, the decoding device may perform operations that are fully symmetric to operations of the encoding device. This may reduce a number of bits needed for neural network configuration at the UE. In some aspects, the decoding device may perform additional operations (e.g., convolution operations, fully connected operation, ResNet operations, and/or the like) in addition to operations of the encoding device. In some aspects, the decoding device may perform operations that are asymmetric to operations of the encoding device.

Based at least in part on the encoding device encoding a data set using a neural network for uplink communication, the encoding device (e.g., a UE) may transmit CSF with a reduced payload. This may conserve network resources that may otherwise have been used to transmit a full data set as sampled by the encoding device.

As indicated above, FIG. 4B is provided merely as an example. Other examples may differ from what is described with regard to FIG. 4B.

The neural network based CSI based on machine learning or a neural network, such as described in connection with FIG. 4A, may compress the downlink channel in a more comprehensive manner. For example, in Type II CSI, a sub-band size may be fixed for all sub-bands for which the UE reports CSI. For example, the sub-band granularity (e.g., sub-band) size may not be a function of a sub-band index within a bandwidth part (BWP). For some frequency bands, the sub-band size may provide more granularity that is needed. In other frequency bands, the sub-band size may not provide enough granularity. The neural network based CSI may address the problems of a fixed sub-band size by providing CSI over an entire channel, for example. The neural network based CSI may be configured to compress some sub-bands with greater or lesser accuracy. The neural network based CSI may also provide benefits for multiple user multiple input multiple output (MU-MIMO) wireless communication, e.g., at a base station. The neural network based CSI provides direct information about the channel and the interference and allows the decoding device (such as a base station) to better group receivers (e.g., UEs).

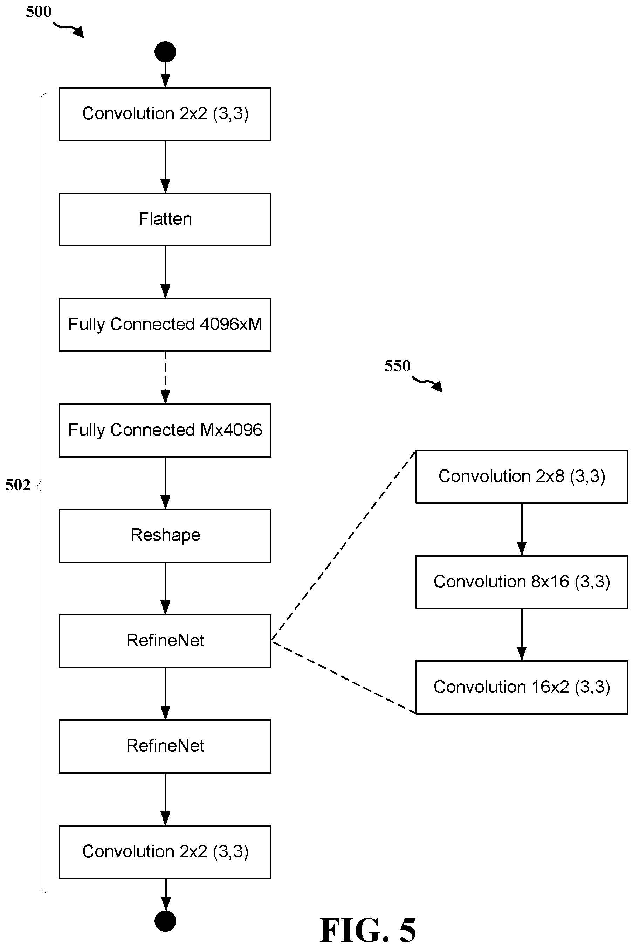

FIG. 5 is a diagram illustrating an example 500 associated with an encoding device and a decoding device, in accordance with various aspects of the present disclosure. The encoding device (e.g., UE 102/350, encoding device 400, and/or the like) may be configured to perform one or more operations 502 on data to compress the data. The decoding device (e.g., base station 102/180/310, decoding device 425, and/or the like) may be configured to decode the compressed data to determine information.

As used herein, a "layer" of a neural network is used to denote an operation on input data. For example, a convolution layer, a fully connected layer, and/or the like denote associated operations on data that is input into a layer. A convolution AxB operation refers to an operation that converts a number of input features A into a number of output features *B*. "Kernel size" refers to a number of adjacent coefficients that are combined in a dimension.

As used herein, "weight" is used to denote one or more coefficients used in the operations in the layers for combining various rows and/or columns of input data. For example, a fully connected layer operation may have an output *y* that is determined based at least in part on a sum of a product of input matrix *x* and weights *A* (which may be a matrix) and bias values *B* (which may be a matrix). The term "weights" may be used herein to generically refer to both weights and bias values.

As shown in example 500, the encoding device may perform a convolution operation on samples. For example, the encoding device may receive a set of bits structured as a 2x64x32 data set that indicates IQ sampling for tap features (e.g., associated with multipath timing offsets) and spatial features (e.g., associated with different antennas of the encoding device). The convolution operation may be a 2x2 operation with kernel sizes of 3 and 3 for the data structure. The output of the convolution operation may be input to a batch normalization (BN) layer followed by a LeakyReLU activation, giving an output data set having dimensions 2x64x32. The encoding device may perform a flattening operation to flatten the bits into a 4096 bit vector. The encoding device may apply a fully connected operation, having dimensions 4096x*M*, to the 4096 bit vector to output a payload of *M* bits. The encoding device may transmit the payload of *M* bits to the decoding device.

The decoding device may apply a fully connected operation, having dimensions Mx4096, to the M bit payload to output a 4096 bit vector. The decoding device may reshape the 4096 bit vector to have dimension 2x64x32. The decoding device may apply one or more refinement network (RefineNet) operations on the reshaped bit vector. For example, a RefineNet operation 550 may include application of a 2x8 convolution operation (e.g., with kernel sizes of 3 and 3) with output that is input to a BN layer followed by a LeakyReLU activation that produces an output data set having dimensions 8x64x32, application of an 8x16 convolution operation (e.g., with kernel sizes of 3 and 3) with output that is input to a BN layer followed by a LeakyReLU activation that produces an output data set having dimensions 16x64x32, and/or application of a 16x2 convolution operation (e.g., with kernel sizes of 3 and 3) with output that is input to a BN layer followed by a LeakyReLU activation that produces an output data set having dimensions 2x64x32. The decoding device may also apply a 2x2 convolution operation with kernel sizes of 3 and 3 to generate decoded and/or reconstructed output.

As indicated above, FIG. 5 is provided merely as an example. Other examples may differ from what is described with regard to FIG. 5.

As described herein, an encoding device operating in a network may measure reference signals and/or the like to report to a decoding device. For example, a UE may measure reference signals during a beam management process to report channel state information feedback (CSF), may measure received power of reference signals from a serving cell and/or neighbor cells, may measure signal strength of inter-radio access technology (e.g., WiFi) networks, may measure sensor signals for detecting locations of one or more objects within an environment, and/or the like. However, reporting this information to the network entity may consume communication and/or network resources.

In some aspects described herein, an encoding device (e.g., a UE) may train one or more neural networks to learn dependence of measured qualities on individual parameters, isolate the measured qualities through various layers of the one or more neural networks (also referred to as "operations"), and compress measurements in a way that limits compression loss.

In some aspects, the encoding device may use a nature of a quantity of bits being compressed to construct a process of extraction and compression of each feature (also referred to as a dimension) that affects the quantity of bits. In some aspects, the quantity of bits may be associated with sampling of one or more reference signals and/or may indicate channel state information.

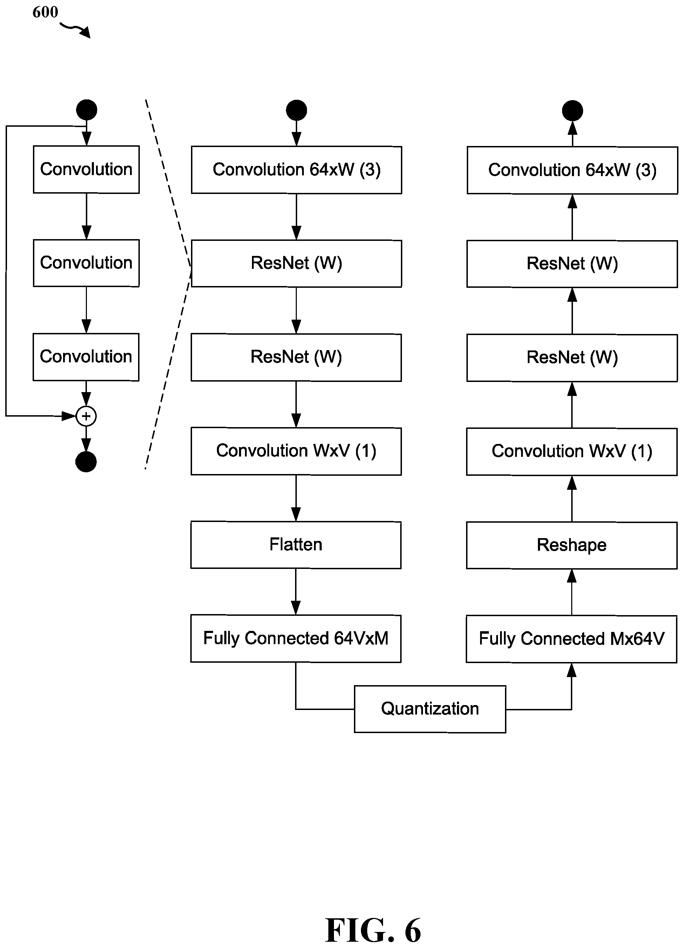

FIG. 6 is a diagram illustrating an example 600 associated with encoding and decoding a data set using a neural network for uplink communication, in accordance with various aspects of the present disclosure. An encoding device (e.g., UE 120, encoding device 400, and/or the like) may be configured to perform one or more operations on samples (e.g., data) received via one or more antennas of the encoding device to compress the samples. A decoding device (e.g., base station 102 or 180, decoding device 425, and/or the like) may be configured to decode the compressed samples to determine information, such as CSF.

As shown by example 600, the encoding device may receive sampling from antennas. For example, the encoding device may receive a 64x64 dimension data set based at least in part on a number of antennas, a number of samples per antenna, and a tap feature.

The encoding device may perform a spatial feature extraction, a short temporal (tap) feature extraction, and/or the like. In some aspects, this may be accomplished through the use of a 1-dimensional convolutional operation, that is fully connected in the spatial dimension (to extract the spatial feature) and simple convolution with a small kernel size (e.g., 3) in the tap dimension (to extract the short tap feature). Output from such a 64x$W$ 1-dimensional convolution operation may be a $W$x64 matrix.

The encoding device may perform one or more ResNet operations. The one or more ResNet operations may further refine the spatial feature and/or the temporal feature. In some aspects, a ResNet operation may include multiple operations associated with a feature. For example, a ResNet operation may include multiple (e.g., 3) 1-dimensional convolution operations, a skip connection (e.g., between input of the ResNet and output of the ResNet to avoid application of the 1-dimensional convolution operations), a summation operation of a path through the multiple 1-dimensional convolution operations and a path through the skip connection, and/or the like. In some aspects, the multiple 1-dimensinoal convolution operations may include a $W$x256 convolution operation with kernel size 3 with output that is input to a BN layer followed by a LeakyReLU activation that produces an output data set of dimension 256x64, a 256x512 convolution operation with kernel size 3 with output that is input to a BN layer followed by a LeakyReLU activation that produces an output data set of dimension 512x64, and 512x$W$ convolution operation with kernel size 3 that outputs a BN data set of dimension $W$x64. Output from the one or more ResNet operations may be a $W$x64 matrix.

The encoding device may perform a $W$x$V$ convolution operation on output from the one or more ResNet operations. The $W$x$V$ convolution operation may include a pointwise (e.g., tap-wise) convolution operation. The $W$x$V$ convolution operation may compress spatial features into a reduced dimension for each tap. The $W$x$V$ convolution operation has an input of $W$ features and an output of $V$ features. Output from the $W$x$V$ convolution operation may be a $V$x64 matrix.

The encoding device may perform a flattening operation to flatten the $V$x64 matrix into a 64$V$ element vector. The encoding device may perform a 64$V$x$M$ fully connected operation to further compress the spatial-temporal feature data set into a low dimension vector of size $M$ for transmission over the air to the decoding device. The encoding device may perform quantization before the over the air transmission of the low dimension vector of size $M$ to map sampling of the transmission into discrete values for the low dimension vector of size $M$.

The decoding device may perform an $M$x64$V$ fully connected operation to decompress the low dimension vector of size $M$ into a spatial-temporal feature data set. The decoding device may perform a reshaping operation to reshape the 64$V$ element vector into a 2-dimensional $V$x64 matrix. The decoding device may perform a $V$x$W$ (with kernel of 1) convolution operation on output from the reshaping operation. The $V$x$W$ convolution operation may include a pointwise (e.g., tap-wise) convolution operation. The $V$x$W$ convolution operation may decompress spatial features from a reduced dimension for each tap. The $V$x$W$ convolution operation has an input of $V$ features and an output of $W$ features. Output from the $V$x$W$ convolution operation may be a $W$x64 matrix.

The decoding device may perform one or more ResNet operations. The one or more ResNet operations may further decompress the spatial feature and/or the temporal feature. In some aspects, a ResNet operation may include multiple (e.g., 3) 1-dimensional convolution operations, a skip connection (e.g., to avoid application of the 1-dimensional convolution operations), a summation operation of a path through the multiple convolution operations and a path through the skip connection, and/or the like. Output from the one or more ResNet operations may be a $W$x64 matrix.

The decoding device may perform a spatial and temporal feature reconstruction. In some aspects, this may be accomplished through the use of a 1-dimensional convolutional operation that is fully connected in the spatial dimension (to reconstruct the spatial feature) and simple convolution with a small kernel size (e.g., 3) in the tap dimension (to reconstruct the short tap feature). Output from the 64x$W$ convolution operation may be a 64x64 matrix.

In some aspects, values of $M$, $W$, and/or $V$ may be configurable to adjust weights of the features, payload size, and/or the like.

As indicated above, FIG. 6 is provided merely as an example. Other examples may differ from what is described with regard to FIG. 6.

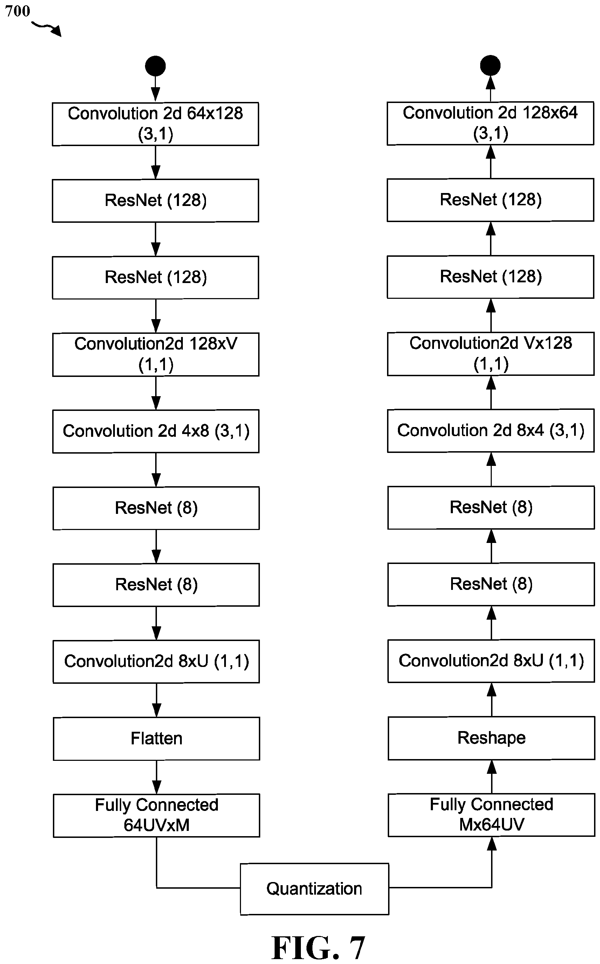

FIG. 7 is a diagram illustrating an example 700 associated with encoding and decoding a data set using a neural network for uplink communication, in accordance with various aspects of the present disclosure. An encoding device (e.g., UE 120, encoding device 400, and/or the like) may be configured to perform one or more operations on samples (e.g., data) received via one or more antennas of the encoding device to compress the samples. A decoding device (e.g., base station 102 or 180, decoding device 425, and/or the like) may be configured to decode the compressed samples to determine information, such as CSF. As shown by example 700, features may be compressed and decompressed in sequence. For example, the encoding device may extract and compress features associated with the input to produce a payload, and then the decoding device may extract and compress features associated with the payload to reconstruct the input. The encoding and decoding operations may be symmetric (as shown) or asymmetric.

As shown by example 700, the encoding device may receive sampling from antennas. For example, the encoding device may receive a 256x64 dimension data set based at least in part on a number of antennas, a number of samples per antenna, and a tap feature. The encoding device may reshape the data to a (64x64x4) data set.

The encoding device may perform a 2-dimensional 64x128 convolution operation (with kernel sizes of 3 and 1). In some aspects, the 64x128 convolution operation may perform a spatial feature extraction associated with the decoding device antenna dimension, a short temporal (tap) feature extraction associated with the decoding device (e.g., base station) antenna dimension, and/or the like. In some aspects, this may be accomplished through the use of a 2D convolutional layer that is fully connected in a decoding device antenna dimension, a simple convolutional operation with a small kernel size (e.g., 3) in the tap dimension and a small kernel size (e.g., 1) in the encoding device antenna dimension. Output from the 64x$W$ convolution operation may be a (128x64x4) dimension matrix.

The encoding device may perform one or more ResNet operations. The one or more ResNet operations may further refine the spatial feature associated with the decoding device and/or the temporal feature associated with the decoding device. In some aspects, a ResNet operation may include multiple operations associated with a feature. For example, a ResNet operation may include multiple (e.g., 3) 2-dimensional convolution operations, a skip connection (e.g., between input of the ResNet and output of the ResNet to avoid application of the 2-dimensional convolution operations), a summation operation of a path through the multiple 2-dimensional convolution operations and a path through the skip connection, and/or the like. In some aspects, the multiple 2-dimensional convolution operations may include a $W$x2$W$ convolution operation with kernel sizes 3 and 1 with output that is input to a BN layer followed by a LeakyReLU activation that produces an output data set of dimension 2$W$x64x$V$, a 2$W$x4$W$ convolution operation with kernel sizes 3 and 1 with output that is input to a BN layer followed by a LeakyReLU activation that produces an output data set of dimension 4$W$x64x$V$, and 4$W$x$W$ convolution operation with kernel sizes 3 and 1 that outputs a BN data set of dimension (128x64x4). Output from the one or more ResNet operations may be a (128x64x4) dimension matrix.

The encoding device may perform a 2-dimensional 128x$V$ convolution operation (with kernel sizes of 1 and 1) on output from the one or more ResNet operations. The 128x$V$ convolution operation may include a pointwise (e.g., tap-wise) convolution operation. The $W$x$V$ convolution operation may compress spatial features associated with the decoding device into a reduced dimension for each tap. Output from the 128x$V$ convolution operation may be a (4x64x$V$) dimension matrix.

The encoding device may perform a 2-dimensional 4x8 convolution operation (with kernel sizes of 3 and 1). In some aspects, the 4x8 convolution operation may perform a spatial feature extraction associated with the encoding device antenna dimension, a short temporal (tap) feature extraction associated with the encoding device antenna dimension, and/or the like. Output from the 4x8 convolution operation may be a (8x64x$V$) dimension matrix.

The encoding device may perform one or more ResNet operations. The one or more ResNet operations may further refine the spatial feature associated with the encoding device and/or the temporal feature associated with the encoding device. In some aspects, a ResNet operation may include multiple operations associated with a feature. For example, a ResNet operation may include multiple (e.g., 3) 2-dimensional convolution operations, a skip connection (e.g., to avoid application of the 2-dimensional convolution operations), a summation operation of a path through the multiple 2-dimensional convolution operations and a path through the skip connection, and/or the like. Output from the one or more ResNet operations may be a (8x64x$V$) dimension matrix.

The encoding device may perform a 2-dimensional 8x$U$ convolution operation (with kernel sizes of 1 and 1) on output from the one or more ResNet operations. The 8x$U$ convolution operation may include a pointwise (e.g., tap-wise) convolution operation. The 8x$U$ convolution operation may compress spatial features associated with the decoding device into a reduced dimension for each tap. Output from the 128x$V$ convolution operation may be a ($U$x64x$V$) dimension matrix.

The encoding device may perform a flattening operation to flatten the ($U$x64x$V$) dimension matrix into a 64$UV$ element vector. The encoding device may perform a 64$UV$x$M$ fully connected operation to further compress a 2-dimensional spatial-temporal feature data set into a low dimension vector of size $M$ for transmission over the air to the decoding device. The encoding device may perform quantization before the over the air transmission of the low dimension vector of size $M$ to map sampling of the transmission into discrete values for the low dimension vector of size $M$.

The decoding device may perform an $M$x64$UV$ fully connected operation to decompress the low dimension vector of size $M$ into a spatial-temporal feature data set. The decoding device may perform a reshaping operation to reshape the 64$UV$ element vector into a ($U$x64x$V$) dimensional matrix. The decoding device may perform a 2-dimensional $U$x8 (with kernel of 1, 1) convolution operation on output from the reshaping operation. The $U$x8 convolution operation may include a pointwise (e.g., tap-wise) convolution operation. The $U$x8 convolution operation may decompress spatial features from a reduced dimension for each tap. Output from the $U$x8 convolution operation may be a (8x64x$V$) dimension data set.

The decoding device may perform one or more ResNet operations. The one or more ResNet operations may further decompress the spatial feature and/or the temporal feature associated with the encoding device. In some aspects, a ResNet operation may include multiple (e.g., 3) 2-dimensional convolution operations, a skip connection (e.g., to avoid application of the 2-dimensional convolution operations), a summation operation of a path through the multiple 2-dimensional convolution operations and a path through the skip connection, and/or the like. Output from the one or more ResNet operations may be a (8x64x$V$) dimension data set.

The decoding device may perform a 2-dimensional 8x4 convolution operation (with kernel sizes of 3 and 1). In some aspects, the 8x4 convolution operation may perform a spatial feature reconstruction in the encoding device antenna dimension, and a short temporal feature reconstruction, and/or the like. Output from the 8x4 convolution operation may be a ($V$x64x4) dimension data set.

The decoding device may perform a 2-dimensional $V$x128 (with kernel of 1) convolution operation on output from the 2-dimensional 8x4 convolution operation to reconstruct a tap feature and a spatial feature associated with the decoding device. The $V$x128 convolution operation may include a pointwise (e.g., tap-wise) convolution operation. The $V$x128 convolution operation may decompress spatial features associated with the decoding device antennas from a reduced dimension for each tap. Output from the $U$x8 convolution operation may be a (128x64x4) dimension matrix.

The decoding device may perform one or more ResNet operations. The one or more ResNet operations may further decompress the spatial feature and/or the temporal feature associated with the decoding device. In some aspects, a ResNet operation may include multiple (e.g., 3) 2-dimensional convolution operations, a skip connection (e.g., to avoid application of the 2-dimensional convolution operations), a summation operation of a path through the multiple 2-dimensional convolution operations and a path through the skip connection, and/or the like. Output from the one or more ResNet operations may be a (128x64x4) dimension matrix.

The decoding device may perform a 2-dimensional 128x64 convolution operation (with kernel sizes of 3 and 1). In some aspects, the 128x64 convolution operation may perform a spatial feature reconstruction associated with the decoding device antenna dimension, a short temporal feature reconstruction, and/or the like. Output from the 128x64 convolution operation may be a (64x64x4) dimension data set.

In some aspects, values of $M$, $V$, and/or $U$ may be configurable to adjust weights of the features, payload size, and/or the like. For example, a value of $M$ may be 32, 64, 128, 256, or 512, a value of $V$ may be 16, and/or a value of $U$ may be 1.

As indicated above, FIG. 7 is provided merely as an example. Other examples may differ from what is described with regard to FIG. 7.

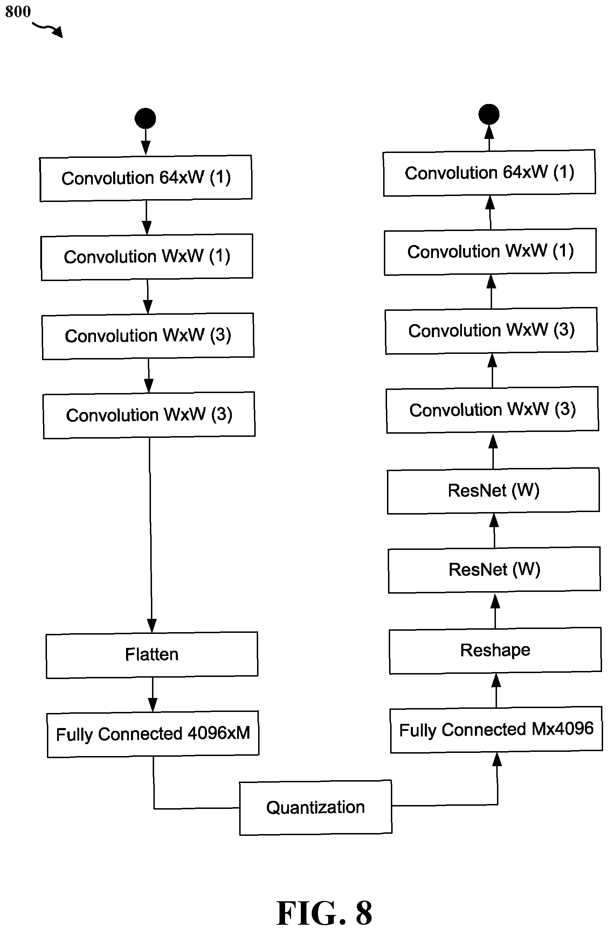

FIG. 8 is a diagram illustrating an example 800 associated with encoding and decoding a data set using a neural network for uplink communication, in accordance with various aspects of the present disclosure. An encoding device (e.g., UE 120, encoding device 400, and/or the like) may be configured to perform one or more operations on samples (e.g., data) received via one or more antennas of the encoding device to compress the samples. A decoding device (e.g., base station 102 or 180, decoding device 425, and/or the like) may be configured to decode the compressed samples to determine information, such as CSF. The encoding device and decoding device operations may be asymmetric. In other words, the decoding device may have a greater number of layers than the decoding device.

As shown by example 800, the encoding device may receive sampling from antennas. For example, the encoding device may receive a 64x64 dimension data set based at least in part on a number of antennas, a number of samples per antenna, and a tap feature.

The encoding device may perform a 64x$W$ convolution operation (with a kernel size of 1). In some aspects, the 64x$W$ convolution operation may be fully connected in antennas, convolution in taps, and/or the like. Output from the 64x$W$ convolution operation may be a $Wx64$ matrix. The encoding device may perform one or more $WxW$ convolution operations (with a kernel size of 1 or 3). Output from the one or more $WxW$ convolution operations may be a $Wx64$ matrix. The encoding device may perform the convolution operations (with a kernel size of 1). In some aspects, the one or more $WxW$ convolution operations may perform a spatial feature extraction, a short temporal (tap) feature extraction, and/or the like. In some aspects, the $WxW$ convolution operations may be a series of 1-dimensional convolution operations.

The encoding device may perform a flattening operation to flatten the $Wx64$ matrix into a $64W$ element vector. The encoding device may perform a 4096x$M$ fully connected operation to further compress the spatial-temporal feature data set into a low dimension vector of size $M$ for transmission over the air to the decoding device. The encoding device may perform quantization before the over the air transmission of the low dimension vector of size $M$ to map sampling of the transmission into discrete values for the low dimension vector of size $M$.

The decoding device may perform a 4096x$M$ fully connected operation to decompress the low dimension vector of size $M$ into a spatial-temporal feature data set. The decoding device may perform a reshaping operation to reshape the $6W$ element vector into a $Wx64$ matrix.

The decoding device may perform one or more ResNet operations. The one or more ResNet operations may decompress the spatial feature and/or the temporal feature. In some aspects, a ResNet operation may include multiple (e.g., 3) 1-dimensional convolution operations, a skip connection (e.g., between input of the ResNet and output of the ResNet to avoid application of the 1-dimensional convolution operations), a summation operation of a path through the multiple 1-dimensional convolution operations and a path through the skip connection, and/or the like. In some aspects, the multiple 1-dimensinoal convolution operations may include a $Wx256$ convolution operation with kernel size 3 with output that is input to a BN layer followed by a LeakyReLU activation that produces an output data set of dimension 256x64, a 256x512 convolution operation with kernel size 3 with output that is input to a BN layer followed by a LeakyReLU activation that produces an output data set of dimension 512x64, and 512x$W$ convolution operation with kernel size 3 that outputs a BN data set of dimension $Wx64$. Output from the one or more ResNet operations may be a $Wx64$ matrix.

The decoding device may perform one or more $WxW$ convolution operations (with a kernel size of 1 or 3). Output from the one or more $WxW$ convolution operations may be a $Wx64$ matrix. The encoding device may perform the convolution operations (with a kernel size of 1). In some aspects, the $WxW$ convolution operations may perform a spatial feature reconstruction, a short temporal (tap) feature reconstruction, and/or the like. In some aspects, the $WxW$ convolution operations may be a series of 1-dimensional convolution operations.

The encoding device may perform a $Wx64$ convolution operation (with a kernel size of 1). In some aspects, the $Wx64$ convolution operation may be a 1-dimensional convolution operation. Output from the 64x$W$ convolution operation may be a 64x64 matrix.

In some aspects, values of $M,$ and/or $W$ may be configurable to adjust weights of the features, payload size, and/or the like.

As indicated above, FIG. 8 is provided merely as an example. Other examples may differ from what is described with regard to FIG. 8.

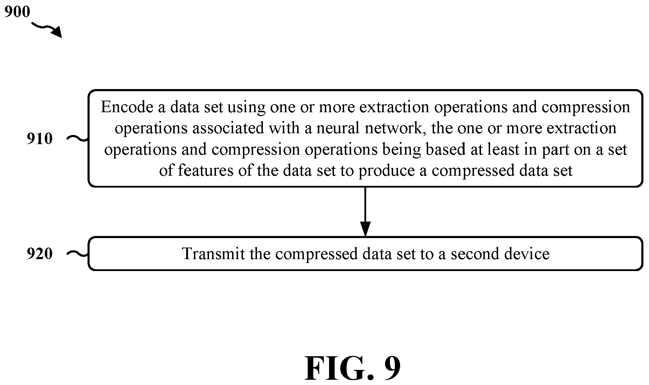

FIG. 9 is a diagram illustrating an example process 900 performed, for example, by a first device, in accordance with various aspects of the present disclosure. Example process 900 is an example where the first device (e.g., an encoding device, UE 104, and/or the like) performs operations associated with encoding a data set using a neural network.

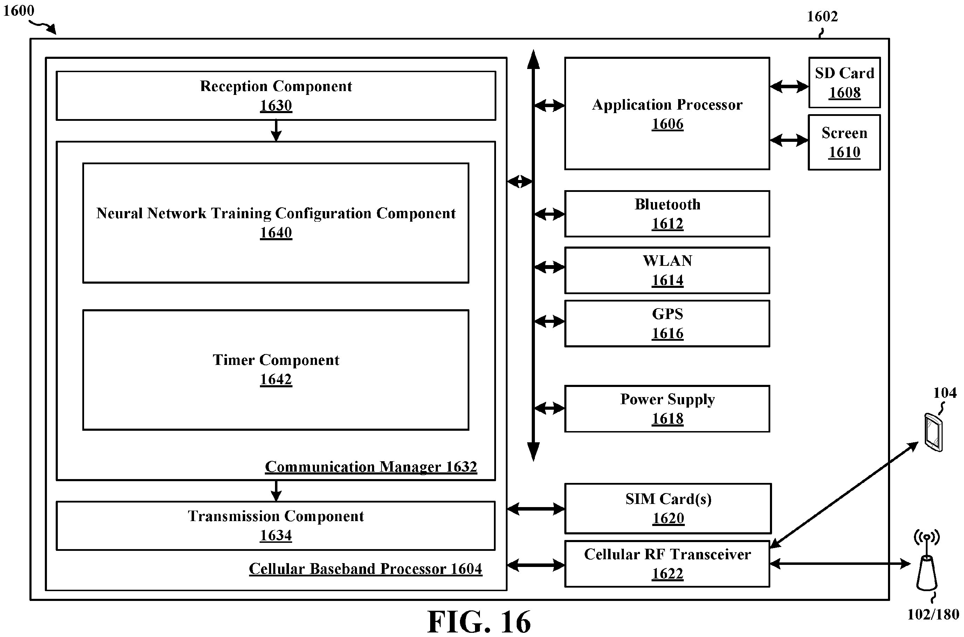

As shown in FIG. 9, in some aspects, process 900 may include encoding a data set using one or more extraction operations and compression operations associated with a neural network, the one or more extraction operations and compression operations being based at least in part on a set of features of the data set to produce a compressed data set (block 910). The encoding may be performed, e.g., by the communication manager 1632 of apparatus 1602 in FIG. 16. For example, the first device may encode a data set using one or more extraction operations and compression operations associated with a neural network, the one or more extraction operations and compression operations being based at least in part on a set of features of the data set to produce a compressed data set, as described above. The one or more additional operations may include one or more of a quantization operation, a flattening operation, or a fully connected operation. The one or more extraction operations and compression operations may include multiple operations that include one or more of a convolution operation, a fully connected layer operation, or a residual neural network operation. The one or more extraction operations and compression operations may include a first extraction operation and a first compression operation performed for a first feature of the set of features of the data set, and a second extraction operation and a second compression operation performed for a second feature of the set of features of the data set.

The one or more extraction operations and compression operations may include one or more of a spatial feature extraction using a one-dimensional convolution operation, a temporal feature extraction using a one-dimensional convolution operation, a residual neural network operation for refining an extracted spatial feature, a residual neural network operation for refining an extracted temporal feature, a pointwise convolution operation for compressing the extracted spatial feature, a pointwise convolution operation for compressing the extracted temporal feature, a flattening operation for flattening the extracted spatial feature, a flattening operation for flattening the extracted temporal feature, or a compression operation for compressing one or more of the extracted temporal feature or the extracted spatial feature into a low dimension vector for transmission.

The one or more extraction operations and compression operations may include a first feature extraction operation associated with one or more features that are associated with a second device, a first compression operation for compressing the one or more features that are associated with the second device, a second feature extraction operation associated with one or more features that are associated with the first device, and a second compression operation for compressing the one or more features that are associated with the first device.

As further shown in FIG. 9, in some aspects, process 900 may include transmitting the compressed data set to a second device (block 920). For example, the first device may transmit the compressed data set to a second device, as described above. The compressed data set may be transmitted to the second device as channel state information feedback that is transmitted to the second device. The transmission, at 920, may be performed, e.g., by the transmission component 1634 of the apparatus 1602 in FIG. 16.

Process 900 may include additional aspects, such as any single aspect or any combination of aspects described below and/or in connection with one or more other processes described elsewhere herein.

The process 900 may further include identifying the set of features of the data set, wherein the one or more extraction operations and compression operations includes a first type of operation performed in a dimension associated with a feature of the set of features of the data set, and a second type of operation, that is different from the first type of operation, performed in remaining dimensions associated with other features of the set of features of the data set. The first type of operation may include a one-dimensional fully connected layer operation, and the second type of operation may include a convolution operation.

The process 900 may further include performing one or more additional operations on an intermediate data set that is output after performing the one or more extraction operations and compression operations.

The data set may be based at least in part on sampling of one or more reference signals. The set of features of the data set includes one or more of a spatial feature, or a tap domain feature.

Although FIG. 9 shows example blocks of process 900, in some aspects, process 900 may include additional blocks, fewer blocks, different blocks, or differently arranged blocks than those depicted in FIG. 9. Additionally, or alternatively, two or more of the blocks of process 900 may be performed in parallel.

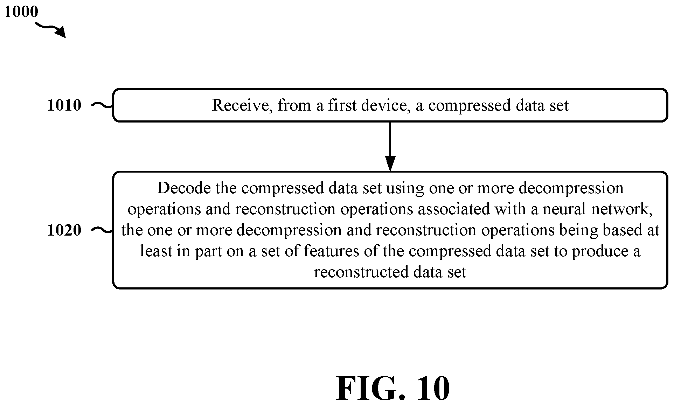

FIG. 10 is a diagram illustrating an example process 1000 performed, for example, by a second device, in accordance with various aspects of the present disclosure. Example process 1000 is an example where the second device (e.g., a decoding device, base station 102, 180, and/or the like) performs operations associated with decoding a data set using a neural network.

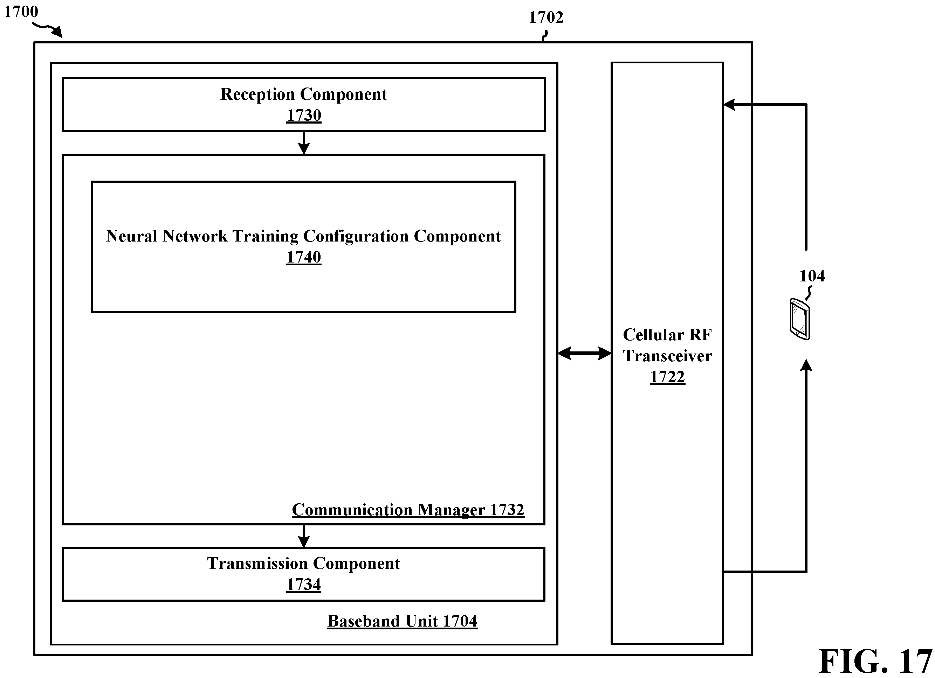

As shown in FIG. 10, in some aspects, process 1000 may include receiving, from a first device, a compressed data set (block 1010). For example, the second device may receive, from a first device, a compressed data set, as described above. The compressed data set may be received from the first device as channel state information feedback that is transmitted from the first device. The reception, at 1010, may be performed, e.g., by the reception component 1730 of the apparatus 1702 in FIG. 17.

As further shown in FIG. 10, in some aspects, process 1000 may include decoding the compressed data set using one or more decompression operations and reconstruction operations associated with a neural network, the one or more decompression and reconstruction operations being based at least in part on a set of features of the compressed data set to produce a reconstructed data set (block 1020). The decoding, at 1020, may be performed, e.g., by the communication manager 1732 of the apparatus 1702 in FIG. 17. For example, the second device may decode the compressed data set using one or more decompression operations and reconstruction operations associated with a neural network, the one or more decompression and reconstruction operations being based at least in part on a set of features of the compressed data set to produce a reconstructed data set, as described above. The one or more additional operation may include one or more of one or more of a convolution operation, a fully connected layer operation, or a residual neural network operation.

Process 1000 may include additional aspects, such as any single aspect or any combination of aspects described below and/or in connection with one or more other processes described elsewhere herein.

Decoding of the compressed data set using the one or more decompression operations and reconstruction operations may include performing the one or more decompression operations and reconstruction operations based at least in part on an assumption that the first device generated the compressed data set using a set of operations that are symmetric to the one or more decompression operations and reconstruction operations, or performing the one or more decompression operations and reconstruction operations based at least in part on an assumption that the first device generated the compressed data set using a set of operations that are asymmetric to the one or more decompression operations and reconstruction operations.

The compressed data set may be based at least in part on sampling by the first device of one or more reference signals. The set of features of the compressed data set may include one or more of a spatial feature, or a tap domain feature.

The one or more decompression operations and reconstruction operations may include a first type of operation performed in a dimension associated with a feature of the set of features of the compressed data set, and a second type of operation, that is different from the first type of operation, performed in remaining dimensions associated with other features of the set of features of the compressed data set.

In one aspect, the first type of operation may include a one-dimensional fully connected layer operation, and the second type of operation may include a convolution operation.

The one or more decompression operations and reconstruction operations may include a first operation performed for a first feature of the set of features of the compressed data set, and a second operation performed for a second feature of the set of features of the compressed data set.

The one or more decompression operations and reconstruction operations may include one or more of a feature decompression operation, a temporal feature reconstruction operation, or a spatial feature reconstruction operation. The one or more decompression operations and reconstruction operations may include a first feature reconstruction operation performed for one or more features associated with the first device, and a second feature reconstruction operation performed for one or more features associated with the second device.

As further shown in FIG. 10, process 1000 may include performing a reshaping operation on the compressed data set.

Although FIG. 10 shows example blocks of process 1000, in some aspects, process 1000 may include additional blocks, fewer blocks, different blocks, or differently arranged blocks than those depicted in FIG. 10. Additionally, or alternatively, two or more of the blocks of process 1000 may be performed in parallel.

The UE may train the neural network to perform one or more of a wireless channel compression at the UE, a wireless channel measurement at the UE, a wireless interference measurement at the UE, UE positioning, wireless waveform determination at the UE, etc. When training the neural network at the UE, it is not always necessary to train all the layers simultaneously. In some cases, some layers can be frozen and others could be trained. That is, the various layers of the neural network may be selectively trained to reduce unnecessary overhead in processing power. Referring again to FIG. 4A, the CSI sequence encoder 406 may capture time-dependency (for example, the Doppler component), and the CSI instance encoder 404 may capture Largely time-invariant aspects of the channels (for example, number of reflector, scatterers, or angle that the beam reaches the antenna of the UE).

For example, in case the UE is stationary in a relatively stable environment, then the change to the channel due to the Doppler effect may be mild. In such a case, the UE may not need to train every layer of the neural network. Accordingly, the UE may train the time dependency capturing layers.

In one aspect, a wireless network entity may configure the UE to freeze the training of certain layers in hidden states. For example, the wireless network entity may configure the UE to perform a hierarchical training, in which the wireless network entity may configure the UE to first train the neural network layers for the environment, and then train the neural network layers for the Doppler effect. Here, the wireless network entity may include a base station, a TRP, a core network component, or another UE. When the wireless network entity is another UE, the wireless network entity and the UE may communicate through a sidelink communication.

In some aspects of the disclosure, the wireless network entity may send a message to the UE configuring the neural network training, dynamically. The message sent from the wireless network entity may include the RRC signaling, a higher-layer signaling, the MAC-CE, the DCI, a sidelink control information (SCI), and/or a sidelink message.

The message may be a set of code points, each of which maps to a number of bits, each associating with a tuple corresponding to a combination of the CSI report ID, the neural network ID, and the layer ID. For example, the message may be DCI including a code point mapped to one (1) neural network identifier (ID) and multiple layer IDs, which may instruct the UE to train multiple layers corresponding to the multiple layer IDs of a neural network corresponding to the neural network ID. In another example, the message may be a DCI including a code point mapped to multiple neural network IDs and one (1) layer ID, and the UE may be instructed to train a layer corresponding to the one (1) layer ID of multiple neural networks corresponding to the multiple neural network IDs. In yet another example, the message may be a DCI including a code point mapped to a CSI report ID, neural network IDs, and layer IDs, instructing the UE that the neural network and the layers corresponding to the neural network IDs and the layer IDs to report the CSI report corresponding to the CSI report ID. Here, the provided example is DCI, but the disclosure is not necessarily limited thereto, and the same message may be transmitted in the MAC-CE format and/or the RRC signaling format.

This message may contain one or more quantities or parameters, such as the CSI reporting ID, the channel state reference signal ID, the component carrier ID, the BWP ID, the neural network ID, the layer ID options, or a group of layers (containing multiple layers), including sub-set of layers that need to be trained. The layer ID options may include different options to indicate the layer ID for training. For one example, the message may indicate the UE to cease the training of the neural network. For another example, the message may indicate the layer IDs to be trained and implicitly indicate that the remaining layers may be frozen. For another example, the message may indicate the layer IDs to be frozen and implicitly indicate that the remaining layers to be trained. For yet another example, the message may include a bit string of length corresponding to the number of layers, each bit indicating whether each layer should be frozen or trained.

In one aspect of the disclosure, the message may include multiple signaling (or a combination) of the RRC signaling, the MAC-CE, and/or the DCI. For example, the RRC signaling may define the layer ID option to follow, and DCI may indicate the Layer ID to train according to the layer ID option. For another example, the RRC signaling may define the configuration of the bit string, and DCI may transmit the bit string to the UE according to the defined configuration of the bit string.

In another aspect, multiple signaling may be configured with hierarchy. For example, the RRC signaling may define the overall configuration of the training, the MAC-CE may create a subset of configurations, and the DCI may indicate one configuration from the subset of configurations.

In aspects of the disclosure, a UE may reduce power consumption through discontinuous reception (DRX) in which the UE monitors for communication or transmits communication during a DRX ON duration and does not monitor for communication or transmit communication during a DRX OFF duration. Here, the DRX OFF duration may include duration that the UE is in the RRC Inactive or Idle mode.

The message from the wireless network entity configuring the neural network training may include a batch train command. For example, the message may be a part of a wake-up signal, including batch train command for a UE being reactivated or a UE entering the DRX ON duration. For example, the batch train command may instruct the UE to train all the layers of a specific neural network, train all layers in all neural networks, or train neural networks with ID list specified. At the beginning of the DRX ON duration, the UE may be specified to update and/or train specific or all neural networks for a period of time.

The message configuring the neural network training parameter may also include cross component carrier (CC) commands. That is, the neural network training configuration message transmitted to the UE on FR1 may instruct the UE to train the network on FR2). Similarly, the message configuring the neural network training parameter may include cross band commands. That is, the neural network training configuration message transmitted over a first BWP may instruct the UE to train the network over a second BWP.

In some aspects of the disclosure, the message may also include timing information. That is, the message may include an expiration time and action indication fields. The action indication field may indicate the UE of an neural network training action to follow at the end of the expiration time. For example, the action indication field may indicate the UE to freeze the training for all layers at the end of the expiration time. For another example, the action indication field may indicate the UE to resume training all layers at the end of the expiration time in the future. By providing the expiration time and the action indication field, the wireless network entity may not need to transmit another full message of the neural network training action at the expiration time.

In some aspects of the disclosure, the neural network training configuration can be specified in an aperiodic manner, or either a periodic manner or a semi-persistent manner with a training periodicity. That is, the neural network training configuration may specify the length of the neural network training and how often and long each neural network training period should be. For example, the neural network training configuration may configure the UE to train the neural network for 100 ms every 1 second, for the next 1 hour.

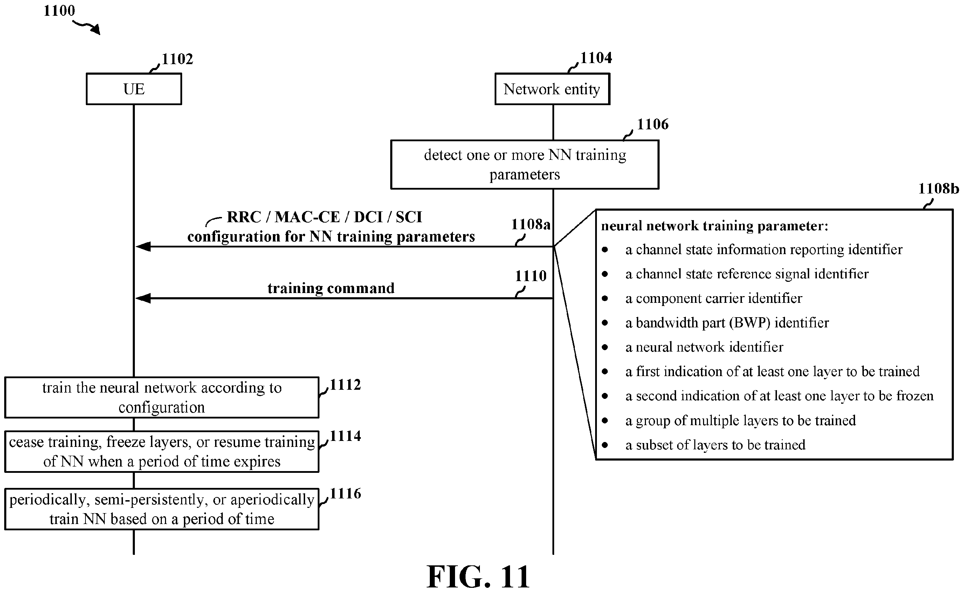

FIG. 11 is a call-flow diagram 1100 of wireless communication. The call-flow diagram 1100 may include a UE 1102 and a network entity 1104. The network entity 1104 may be a base station, a TRP, a core network component, a server, another UE 1102, or a decoding device such as decoding device 425. The network entity 1104 may configure the UE 1102 with neural network training parameters for the UE 1102 to train the neural network configured for various procedures comprising a subset of layers to be trained. The neural network training parameters may include a CSI reporting ID, a channel state reference signal identifier, a channel state reference signal ID, a component carrier ID, a BWP ID, a neural network ID, a first indication of at least one layer to be trained, a second indication of at least one layer to be frozen, a group of multiple layers to be trained or a combination thereof. The UE 1102 may receive the configuration of neural network training parameters from the network entity 1104, and train the neural network configured for various procedures, such as wireless channel compression, wireless channel measurement, wireless interference measurement, UE 1102 positioning, or wireless waveform determination at the UE 1102.

At 1106, the network entity 1104 may detect one or more parameters for neural network training for wireless communication by the UE 1102. That is, the network entity 1104 may determine or detect one or more neural network training parameters that correspond with the CSI report, neural network and/or layer that the UE 1102 should train. The network entity 1104 may instruct the UE 1102 to train the neural network to perform one or more of a wireless channel compression at the UE 1102, a wireless channel measurement at the UE 1102, a wireless interference measurement at the UE 1102, UE positioning, wireless waveform determination at the UE 1102, etc. The network entity 1104 may instruct the UE 1102 to train some of the neural networks and/or layers, and freeze the rest of the neural networks and/or layers, or vice versa.

At 1108a, the network entity 1104 may transmit, to the UE 1102, a configuration for the one or more neural network training parameters for wireless communication by the UE 1102. That is, the network entity 1104 may transmit the configuration for the determined or detected neural network training parameters to the UE 1102. The UE 1102 may receive a configuration from the network entity 1104 for one or more neural network training parameters for wireless communication by the UE 1102. The configuration for the determined or detected neural network training parameters to the UE 1102 may be transmitted through one or more of the higher-layer signaling, the RRC signaling, the MAC-CE, the DCI, the SCI, and/or the sidelink message.

In one example, at 1108a, the UE 1102 may receive multiple sets of neural network training parameters in the higher-layer signaling, and receive an indication of one of the multiple sets of neural network training parameters in the MAC-CE, the DCI, and/or the combination thereof.

The neural network training parameter 1108b may include one or more of a CSI reporting ID, a channel state reference signal identifier, a channel state reference signal ID, a component carrier ID, a BWP ID, a neural network ID, a first indication of at least one layer to be trained, a second indication of at least one layer to be frozen, a group of multiple layers to be trained, and/or a subset of layers to be trained.

At 1110, The network entity 1104 may transmit a training command in a wireless message to indicate to the UE 1102 to apply the configuration to train the neural network at the UE 1102. That is, the network entity 1104 may transmit a separate training command in a wireless message to the UE 1102. The UE 1102 may receive a training command in a wireless message, wherein the UE 1102 may apply the configuration to train the neural network at the UE 1102 in response to receiving the training command. The transmission of the training command may be independent from the neural network training. For example, the training command may be received in a first frequency range, and the UE 1102 may train the neural network on a second frequency range. For another example, the UE 1102 may receive the training command in a first component carrier, and the UE 1102 may train the neural network on a second component carrier. For yet another example, the UE 1102 may receive the training command in a first frequency band, and the UE 1102 may train the neural network on a second frequency band. The training command may be a group common command, and the group common command may be received over a group common DCI.

At 1112, the UE 1102 may train the neural network based on the configuration received from the network entity 1104. When a separate training command was transmitted in a wireless message to the UE 1102, the UE 1102 may apply the configuration to train the neural network at the UE 1102 in response to receiving the training command. The configuration for neural network training parameters and the training command and the neural network training may be configured with hierarchy. For example, the UE 1102 may apply the configuration to train each layer of the neural network at the UE 1102 in response to receiving the training command. For another example, the UE 1102 may apply the configuration to train each layer of multiple neural networks at the UE 1102 in response to receiving the training command. For yet another example, the UE 1102 may apply the configuration to train one or more neural networks identified in the training command.

At 1114, the UE 1102 may cease training, freeze layers, or resume training of the neural network when the period of time expires. The configuration may indicate a period of time associated with the training of the neural network. The period of time may be one or more of a timer and/or a periodicity of the neural network training. First, the configuration may indicate an action for the UE 1102 to perform when the period of time expires. Accordingly, the action may include one or more of ceasing training the neural network, freezing layers of the neural network, or resuming training of one or more layers of the neural network. Accordingly,

The period of time of the configuration may indicate the periodicity of the neural network training. Accordingly, at 1116, the UE 1102 may periodically, semi-persistently, or aperiodically train the neural network based on a period of time. For example, the period of time may indicate a periodic time or semi-persistent time for training the neural network, and the UE 1102 is configured to periodically train the neural network based on the period of time. For another example, the period of time may be an aperiodic time for training the neural network, and the UE 1102 is configured to aperiodic train of the neural network based on the period of time.

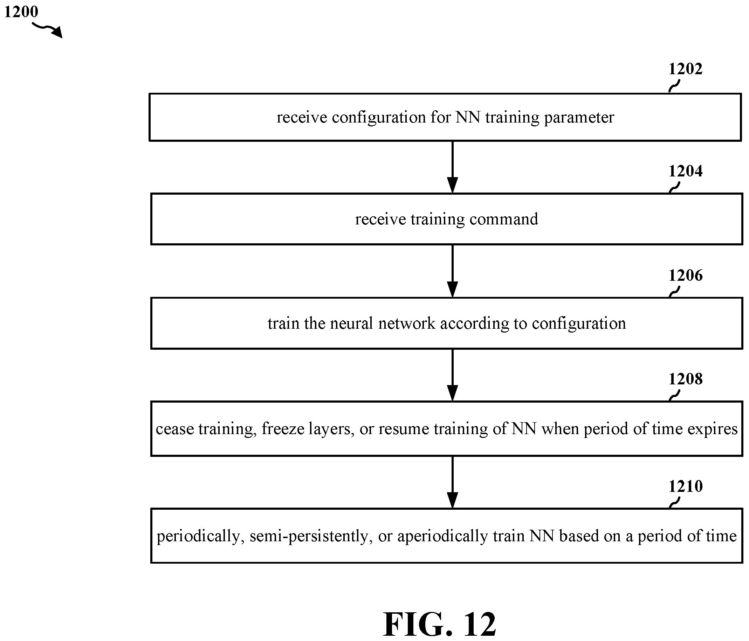

FIG. 12 is a flowchart 1200 of a method of wireless communication. The method may be performed by a UE (e.g., the UE 104/1102; the apparatus 1602). The UE may receive a configuration of neural network training parameters from a network entity, and train the neural network configured for various procedures, such as wireless channel compression, wireless channel measurement, wireless interference measurement, UE positioning, or wireless waveform determination at the UE.

At 1202, the UE receive a configuration from the network entity for one or more neural network training parameters for wireless communication by the UE. That is, the UE may receive a configuration for the determined or detected neural network training parameters from a network entity (e.g., as at 1108a). The configuration for the neural network training parameters to the UE may be received through one or more of the RRC signaling, the MAC-CE, and/or the DCI. The configuration may instruct the UE to perform one or more of a wireless channel compression at the UE, a wireless channel measurement at the UE, a wireless interference measurement at the UE, UE positioning, wireless waveform determination at the UE, etc. The configuration may instruct the UE to train some of the neural networks and/or layers, and freeze the rest of the neural networks and/or layers, or vice versa. In one example, the UE may receive multiple sets of neural network training parameters in the higher-layer signaling, and receive an indication of one of the multiple sets of neural network training parameters in the MAC-CE, the DCI, and/or the combination thereof. For example, at 1108a, the UE 1102 may receive a configuration from the network entity 1104 for one or more neural network training parameters for wireless communication by the UE 1102. Furthermore, 1202 may be performed by a neural network training configuration component 1640.

At 1204, the UE receive a training command in a wireless message, wherein the UE may apply the configuration to train the neural network at the UE in response to receiving the training command. That is, the UE may receive a separate training command in a wireless message from the network entity (e.g., as at 1110). The reception of the training command may be independent from the neural network training. For example, the training command may be received in a first frequency range, and the UE may train the neural network on a second frequency range. For another example, the UE may receive the training command in a first component carrier, and the UE may train the neural network on a second component carrier. For yet another example, the UE may receive the training command in a first frequency band, and the UE may train the neural network on a second frequency band. For example, at 1110, the UE 1102 may receive a training command in a wireless message, wherein the UE 1102 may apply the configuration to train the neural network at the UE 1102 in response to receiving the training command. Furthermore, 1204 may be performed by the neural network training configuration component 1640. The training command may be a group common command, and the group common command may be transmitted over a group common DCI.

At 1206, the UE may train the neural network based on the configuration received from the network entity, (e.g., as at 1112). The configuration for the neural network training parameters and the training command and the neural network training may be configured with hierarchy. For example, the UE may apply the configuration to train each layer of the neural network at the UE in response to receiving the training command. For another example, the UE may apply the configuration to train each layer of multiple neural networks at the UE in response to receiving the training command. For yet another example, the UE may apply the configuration to train one or more neural networks identified in the training command. For example, at 1112, the UE 1102 may train the neural network based on the configuration received from the network entity 1104. Furthermore, 1206 may be performed by the neural network training configuration component 1640.

At 1208, the UE may cease training, freeze layers, or resume training of the neural network when the period of time expires (e.g., as at 1114). The configuration for the neural network training parameters may indicate a period of time associated with the training of the neural network. The period of time may be one or more of a timer and/or a periodicity of the neural network training. The configuration may indicate an action for the UE to perform when the period of time expires. Accordingly, the action may include one or more of ceasing training the neural network, freezing layers of the neural network, or resuming training of one or more layers of the neural network. For example, at 1114, the UE 1102 may cease training, freeze layers, or resume training of the neural network when the period of time expires. Furthermore, 1208 may be performed by the neural network training configuration component 1640 and a timer component 1642.

At 1210, the UE may periodically, semi-persistently, or aperiodically train the neural network based on a period of time (e.g., as at 1116). The period of time of the configuration may indicate the periodicity of the neural network training. For example, the period of time may indicate a periodic time or semi-persistent time for training the neural network, and the UE may be configured to periodically train the neural network based on the period of time. For another example, the period of time may be an aperiodic time for training the neural network, and the UE may be configured to aperiodic train of the neural network based on the period of time. For example, at 1116, the UE 1102 may periodically, semi-persistently, or aperiodically train the neural network based on a period of time. Furthermore, 1210 may be performed by the neural network training configuration component 1640 and the timer component 1642.

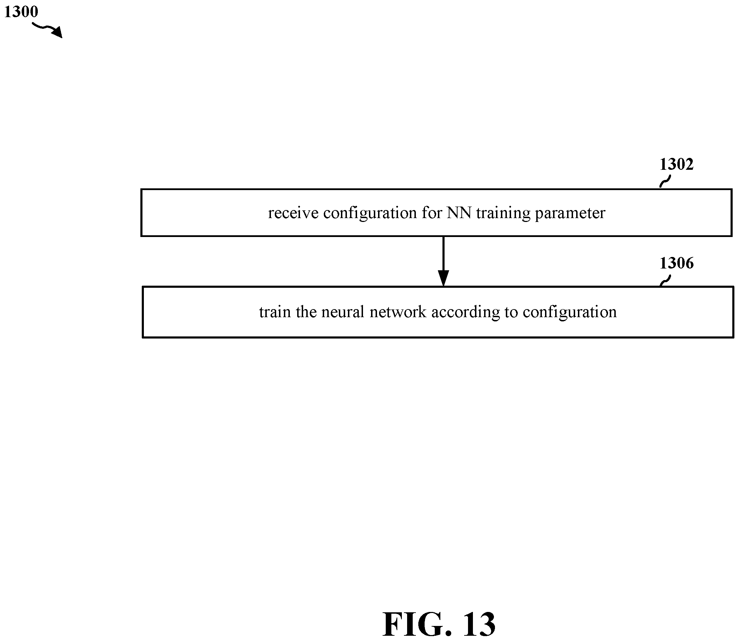

FIG. 13 is a flowchart 1300 of a method of wireless communication. The method may be performed by a UE (e.g., the UE 104/1102; the apparatus 1602). The UE may receive a configuration of neural network training parameters from a network entity, and train the neural network configured for various procedures, such as wireless channel compression, wireless channel measurement, wireless interference measurement, UE positioning, or wireless waveform determination at the UE.

At 1302, the UE receive a configuration from the network entity for one or more neural network training parameters for wireless communication by the UE. That is, the UE may receive a configuration for the determined or detected neural network training parameters from a network entity (e.g., as at 1108a). The configuration for the neural network training parameters to the UE may be received through one or more of the RRC signaling, the MAC-CE, and/or the DCI. The configuration may instruct the UE to perform one or more of a wireless channel compression at the UE, a wireless channel measurement at the UE, a wireless interference measurement at the UE, UE positioning, wireless waveform determination at the UE, etc. The configuration may instruct the UE to train some of the neural networks and/or layers, and freeze the rest of the neural networks and/or layers, or vice versa. In one example, the UE may receive multiple sets of neural network training parameters in the higher-layer signaling, and receive an indication of one of the multiple sets of neural network training parameters in the MAC-CE, the DCI, and/or the combination thereof. For example, at 1108a, the UE 1102 may receive a configuration from the network entity 1104 for one or more neural network training parameters for wireless communication by the UE 1102. Furthermore, 1302 may be performed by a neural network training configuration component 1640.

At 1306, the UE may train the neural network based on the configuration received from the network entity, (e.g., as at 1112). The configuration for the neural network training parameters and the training command and the neural network training may be configured with hierarchy. For example, the UE may apply the configuration to train each layer of the neural network at the UE in response to receiving the training command. For another example, the UE may apply the configuration to train each layer of multiple neural networks at the UE in response to receiving the training command. For yet another example, the UE may apply the configuration to train one or more neural networks identified in the training command. For example, at 1112, the UE 1102 may train the neural network based on the configuration received from the network entity 1104. Furthermore, 1306 may be performed by the neural network training configuration component 1640.

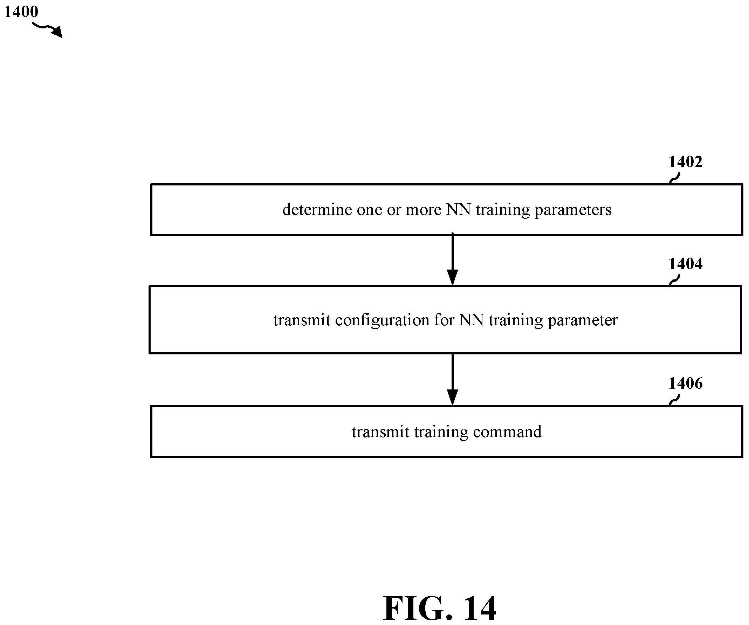

FIG. 14 is a flowchart 1400 of a method of wireless communication. The method may be performed by a network entity, which may include a UE (e.g., the UE 104/1102; the apparatus 1602) or a base station (e.g., the base station 102/180/1104; the apparatus 1702.) The network entity 1104 may configure the UE 1102 with neural network training parameters for the UE 1102 to train the neural network configured for various procedures. The neural network training parameters may include a CSI reporting ID, a channel state reference signal identifier, a channel state reference signal ID, a component carrier ID, a BWP ID, a neural network ID, a first indication of at least one layer to be trained, a second indication of at least one layer to be frozen, a group of multiple layers to be trained, a subset of layers to be trained, or a combination thereof.

At 1402, the network entity may detect one or more parameters for neural network training for wireless communication by the UE. That is, the network entity may determine or detect one or more neural network training parameters that correspond with the CSI report, neural network and/or layer that a UE should train. (e.g., as at 1106). The network entity may instruct the UE to train the neural network to perform one or more of a wireless channel compression at the UE, a wireless channel measurement at the UE, a wireless interference measurement at the UE, UE positioning, wireless waveform determination at the UE, etc. The network entity may instruct the UE to train some of the neural networks and/or layers, and freeze the rest of the neural networks and/or layers, or vice versa. For example, at 1106, the network entity 1104 may detect one or more parameters for neural network training for wireless communication by the UE 1102. Furthermore, 1402 may be performed by a neural network training configuration component 1740.

At 1404, the network entity may transmit, to the UE, a configuration for the one or more neural network training parameters for wireless communication by the UE. That is, the network entity may transmit a configuration for the determined or detected neural network training parameters to the UE (e.g., as at 1108a). The configuration for the determined or detected neural network training parameters to the UE may be transmitted through one or more of the RRC signaling, the MAC-CE, and/or the DCI The network entity may instruct the UE to train the neural network to perform one or more of a wireless channel compression at the UE, a wireless channel measurement at the UE, a wireless interference measurement at the UE, UE positioning, wireless waveform determination at the UE, etc. The network entity may instruct the UE to train some of the neural networks and/or layers, and freeze the rest of the neural networks and/or layers, or vice versa. For example, at 1108a, the network entity 1104 may transmit, to the UE 1102, a configuration for the one or more neural network training parameters for wireless communication by the UE 1102. Furthermore, 1404 may be performed by the neural network training configuration component 1740.

The neural network training parameter comprises a subset of layers to be trained and may include one or more of a CSI reporting ID, a channel state reference signal identifier, a channel state reference signal ID, a component carrier ID, a BWP ID, a neural network ID, a first indication of at least one layer to be trained, a second indication of at least one layer to be frozen and/ or a group of multiple layers to be trained. In one example, the network entity may transmit multiple sets of neural network training parameters in the higher-layer signaling, and receive an indication of one of the multiple sets of neural network training parameters in the MAC-CE, the DCI, and/or the combination thereof.

At 1406, the network entity may transmit a training command in a wireless message to indicate to the UE to apply the configuration to train the neural network at the UE. That is, the network entity may transmit a separate training command in a wireless message to the UE (e.g., as at 1110). The transmission of the training command may be independent from the neural network training. For example, the training command may be transmitted in a first frequency range, and the UE may train the neural network on a second frequency range. For another example, the network entity may transmit the training command in a first component carrier, and the UE may train the neural network on a second component carrier. For yet another example, the network entity may transmit the training command in a first frequency band, and the UE may train the neural network on a second frequency band. For example, at 1110, the network entity 1104 may transmit a training command in a wireless message to indicate to the UE 1102 to apply the configuration to train the neural network at the UE 1102. Furthermore, 1406 may be performed by the neural network training configuration component 1740.

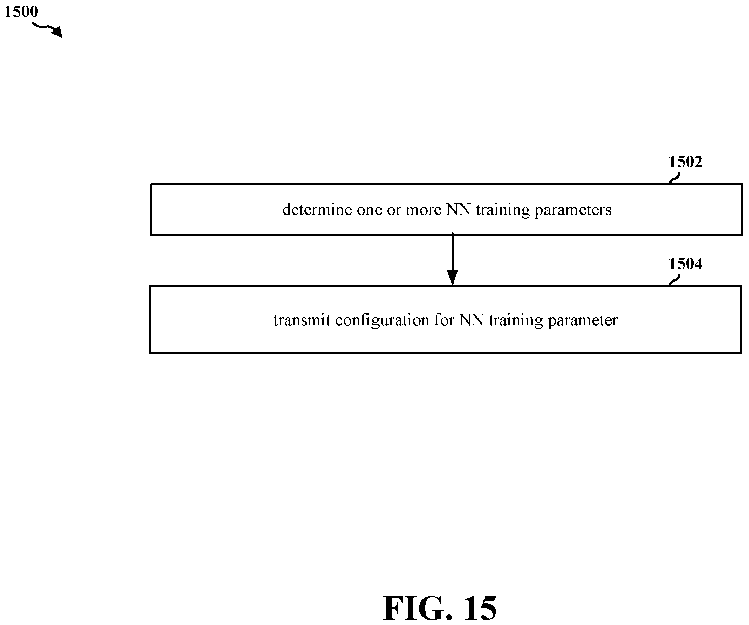

FIG. 15 is a flowchart 1500 of a method of wireless communication. The method may be performed by a network entity, which may include a UE (e.g., the UE 104/1102; the apparatus 1602) or a base station (e.g., the base station 102/180/1104; the apparatus 1702.) The network entity 1104 may configure the UE 1102 with neural network training parameters for the UE 1102 to train the neural network configured for various procedures. The neural network training parameters comprises a subset of layers to be trained and may include a CSI reporting ID, a channel state reference signal identifier, a channel state reference signal ID, a component carrier ID, a BWP ID, a neural network ID, a first indication of at least one layer to be trained, a second indication of at least one layer to be frozen, a group of multiple layers to be trained, or a combination thereof.

At 1502, the network entity may detect one or more parameters for neural network training for wireless communication by the UE. That is, the network entity may determine or detect one or more neural network training parameters that correspond with the CSI report, neural network and/or layer that a UE should train. (e.g., as at 1106). The network entity may instruct the UE to train the neural network to perform one or more of a wireless channel compression at the UE, a wireless channel measurement at the UE, a wireless interference measurement at the UE, UE positioning, wireless waveform determination at the UE, etc. The network entity may instruct the UE to train some of the neural networks and/or layers, and freeze the rest of the neural networks and/or layers, or vice versa. For example, at 1106, the network entity 1104 may detect one or more parameters for neural network training for wireless communication by the UE 1102. Furthermore, 1502 may be performed by a neural network training configuration component 1740.

At 1504, the network entity may transmit, to the UE, a configuration for the one or more neural network training parameters for wireless communication by the UE. That is, the network entity may transmit a configuration for the determined or detected neural network training parameters to the UE (e.g., as at 1108a). The configuration for the determined or detected neural network training parameters to the UE may be transmitted through one or more of the RRC signaling, the MAC-CE, and/or the DCI. The network entity may instruct the UE to train the neural network to perform one or more of a wireless channel compression at the UE, a wireless channel measurement at the UE, a wireless interference measurement at the UE, UE positioning, wireless waveform determination at the UE, etc. The network entity may instruct the UE to train some of the neural networks and/or layers, and freeze the rest of the neural networks and/or layers, or vice versa. For example, at 1108a, the network entity 1104 may transmit, to the UE 1102, a configuration for the one or more neural network training parameters for wireless communication by the UE 1102. Furthermore, 1504 may be performed by the neural network training configuration component 1740.

The neural network training parameter may include one or more of a CSI reporting ID, a channel state reference signal identifier, a channel state reference signal ID, a component carrier ID, a BWP ID, a neural network ID, a first indication of at least one layer to be trained, a second indication of at least one layer to be frozen, a group of multiple layers to be trained, and/or a subset of layers to be trained. In one example, the network entity may transmit multiple sets of neural network training parameters in the higher-layer signaling, and receive an indication of one of the multiple sets of neural network training parameters in the MAC-CE, the DCI, and/or the combination thereof.

FIG. 16 is a diagram 1600 illustrating an example of a hardware implementation for an apparatus 1602. The apparatus 1602 may be a UE, a component of a UE, or may implement UE functionality. In some aspects, the apparatus 1602 may include a cellular baseband processor 1604 (also referred to as a modem) coupled to a cellular RF transceiver 1622. In some aspects, the apparatus 1602 may further include one or more subscriber identity modules (SIM) cards 1620, an application processor 1606 coupled to a secure digital (SD) card 1608 and a screen 1610, a Bluetooth module 1612, a wireless local area network (WLAN) module 1614, a Global Positioning System (GPS) module 1616, or a power supply 1618. The cellular baseband processor 1604 communicates through the cellular RF transceiver 1622 with the UE 104 and/or base station 102 or 180. The cellular baseband processor 1604 may include a computer-readable medium / memory. The computer-readable medium / memory may be non-transitory. The cellular baseband processor 1604 is responsible for general processing, including the execution of software stored on the computer-readable medium / memory. The software, when executed by the cellular baseband processor 1604, causes the cellular baseband processor 1604 to perform the various functions described *supra.* The computer-readable medium / memory may also be used for storing data that is manipulated by the cellular baseband processor 1604 when executing software. The cellular baseband processor 1604 further includes a reception component 1630, a communication manager 1632, and a transmission component 1634. The communication manager 1632 includes the one or more illustrated components. The components within the communication manager 1632 may be stored in the computer-readable medium / memory and/or configured as hardware within the cellular baseband processor 1604. The cellular baseband processor 1604 may be a component of the UE 350 and may include the memory 360 and/or at least one of the TX processor 368, the RX processor 356, and the controller/processor 359. In one configuration, the apparatus 1602 may be a modem chip and include just the cellular baseband processor 1604, and in another configuration, the apparatus 1602 may be the entire UE (e.g., see 350 of FIG. 3) and include the additional modules of the apparatus 1602.

The communication manager 1632 includes a neural network training configuration component 1640 that is configured to receive a configuration for the determined or detected neural network training parameters from a network entity, receive a separate training command in a wireless message from the network entity, train the neural network based on the configuration received from the network entity, cease training, freeze layers, or resume training of the neural network when the period of time expires, and periodically, semi-persistently, or aperiodically train the neural network based on a period of time, e.g., as described in connection with 1202, 1204, 1206, 1208, 1210, 1302, and 1306. The communication manager 1632 further includes a timer component 1642 that is configured to cease training, freeze layers, or resume training of the neural network when the period of time expires, and periodically, semi-persistently, or aperiodically train the neural network based on a period of time, e.g., as described in connection with 1208 and 1210. The components 1640 and 1642 may be configured to communicate with each other.

The apparatus may include additional components that perform each of the blocks of the algorithm in the aforementioned flowcharts of FIGs. 11, 12, and 13. As such, each block in the aforementioned flowcharts of FIGs. 11, 12, and 13 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1602, and in particular the cellular baseband processor 1604, includes means for receiving a configuration from a wireless network entity for one or more neural network training parameters for wireless communication by the UE, and means for training the neural network based on the configuration received from the wireless network entity. The apparatus 1602 also include means for receiving a training command in a wireless message, wherein the UE applies the configuration to train the neural network at the UE in response to receiving the training command. The aforementioned means may be one or more of the aforementioned components of the apparatus 1602 configured to perform the functions recited by the aforementioned means. As described *supra,* the apparatus 1602 may include the TX Processor 368, the RX Processor 356, and the controller/processor 359. As such, in one configuration, the aforementioned means may be the TX Processor368, the RX Processor 356, and the controller/processor 359 configured to perform the functions recited by the aforementioned means.

FIG. 17 is a diagram 1700 illustrating an example of a hardware implementation for an apparatus 1702. The apparatus 1702 may be a base station, a component of a base station, or may implement base station functionality. In some aspects, the apparatus 1602 may include a baseband unit 1704. The baseband unit 1704 may communicate through a cellular RF transceiver 1722 with the UE 104. The baseband unit 1704 may include a computer-readable medium / memory. The baseband unit 1704 is responsible for general processing, including the execution of software stored on the computer-readable medium / memory. The software, when executed by the baseband unit 1704, causes the baseband unit 1704 to perform the various functions described *supra.* The computer-readable medium / memory may also be used for storing data that is manipulated by the baseband unit 1704 when executing software. The baseband unit 1704 further includes a reception component 1730, a communication manager 1732, and a transmission component 1734. The communication manager 1732 includes the one or more illustrated components. The components within the communication manager 1732 may be stored in the computer-readable medium / memory and/or configured as hardware within the baseband unit 1704. The baseband unit 1704 may be a component of the base station 310 and may include the memory 376 and/or at least one of the TX processor 316, the RX processor 370, and the controller/processor 375.

The communication manager 1732 includes a neural network training configuration component 1740 that is configured to determine or detect one or more neural network training parameters that correspond with the CSI report, neural network and/or layer that a UE should train, transmit a configuration for the determined or detected neural network training parameters to the UE, transmit a configuration for the determined or detected neural network training parameters to the UE, and transmit a separate training command in a wireless message to the UE, e.g., as described in connection with 1402, 1404, 1406, 1502, and 1504.

The apparatus may include additional components that perform each of the blocks of the algorithm in the aforementioned flowcharts of FIGs. 11, 14, and 15. As such, each block in the aforementioned flowcharts of FIGs. 11, 14, and 15 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1702, and in particular the baseband unit 1704, includes means for determining or detecting one or more parameters for neural network training for wireless communication by a UE, and means for transmitting, to the UE, a configuration for the one or more neural network training parameters for wireless communication by the UE. The apparatus 1702 also includes means for transmitting a training command in a wireless message to indicate to the UE to apply the configuration to train the neural network at the UE. The aforementioned means may be one or more of the aforementioned components of the apparatus 1702 configured to perform the functions recited by the aforementioned means. As described supra, the apparatus 1702 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

Referring again to FIGS. 11, 12, 13, 14, 15, 16, and 17, a network entity may determine or detect one or more parameters for neural network training for wireless communication by a UE, and transmit, to the UE, a configuration for the one or more neural network training parameters for wireless communication by the UE. The wireless network entity may be a base station, a TRP, a core network component, or another UE. The UE may receive the configuration from the wireless network entity, and train the neural network based on the configuration received from the wireless network entity. The UE may train the neural network to perform one or more of wireless channel compression at the UE, wireless channel measurement at the UE, wireless interference measurement at the UE, UE positioning, and/or wireless waveform determination at the UE.

The configuration of the one or more neural network training parameters may be received in one or more of the RRC signaling, the higher-layer signaling, the MAC-CE, the DCI, the SCI, and/or the sidelink message. The configuration may include multiple sets of neural network training parameters in the higher-layer signaling, and an indication of one of the multiple sets of neural network training parameters in the MAC-CE, the DCI, and/or the combination thereof.

The one or more neural network training parameters comprises a subset of layers to be trained and may include one or more of a channel state information reporting ID, a channel state reference signal ID, a component carrier ID, a bandwidth part (BWP) ID, a neural network ID, a first indication of at least one layer to be trained, a second indication of at least one layer to be frozen or a group of multiple layers to be trained.

The network entity may transmit a training command in a wireless message to the UE, and the UE may apply the configuration to train the neural network at the UE in response to receiving the training command. For example, the UE may apply the configuration to train each layer of the neural network at the UE in response to receiving the training command. For another example, the UE may apply the configuration to train each layer of multiple neural networks at the UE in response to receiving the training command. For yet another example, the UE may apply the configuration to train one or more neural networks identified in the training command.

The transmission of the training command and the neural network training may be independently configured. For example, the training command may be received in a first frequency range, and the UE may train the neural network on a second frequency range. For another example, the UE may receive the training command in a first component carrier, and the UE may train the neural network on a second component carrier. For yet another example, the UE may receive the training command in a first frequency band, and the UE may train the neural network on a second frequency band.

The configuration may indicate a period of time associated with the training the neural network. The period of time may be one or more of a timer and/or a periodicity of the neural network training. In one aspect, the configuration may indicate an action for the UE to perform when the period of time expires. The action may include one or more of ceasing training the neural network, freezing layers of the neural network, or resuming training of one or more layers of the neural network. In another aspect, the period of time may indicate the periodicity of the neural network training. For example, the period of time may indicate a periodic time or semi-persistent time for training the neural network, and the UE may be configured to periodically train the neural network based on the period of time. For another example, the period of time may be an aperiodic time for training the neural network, and the UE may be configured to aperiodic train of the neural network based on the period of time.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

**Claims**

1. An apparatus for wireless communication at a user equipment, UE, the apparatus comprising:

   a memory; and
   at least one processor coupled to the memory, the at least one processor and the memory configured to:

   receive (1302) a configuration from a wireless network entity for one or more neural network training parameters for wireless communication by the UE, wherein the one or more neural network training parameters comprise a subset of layers to be trained; and
   train (1306) the neural network based on the configuration received from the wireless network entity.

2. The apparatus of claim 1, wherein the neural network is trained to perform at least one of:

   wireless channel compression at the UE,
   wireless channel measurement at the UE,
   wireless interference measurement at the UE,
   UE positioning, or
   wireless waveform determination at the UE.

3. The apparatus of claim 1, wherein the configuration of the one or more neural network training parameters is received in at least one of:

   higher-layer signaling,
   radio resource control, RRC, signaling,
   a medium access control, MAC, control element, CE, MAC-CE,
   downlink control information, DCI,
   sidelink control information, SCI, or
   a sidelink message.

4. The apparatus of claim 3, wherein, to receive the configuration, the at least one processor and the memory are configured to:

   receive multiple sets of neural network training parameters in the higher-layer signaling; and
   receive an indication of one of the multiple sets of neural network training parameters in at least one of the MAC-CE, the DCI, or a combination thereof.

5. The apparatus of claim 1, wherein the one or more neural network training parameters includes at least one of:

   a channel state information reporting identifier,
   a channel state reference signal identifier,
   a component carrier identifier,
   a bandwidth part, BWP, identifier,

a neural network identifier,
a first indication of at least one layer to be trained,
a second indication of at least one layer to be frozen,
a group of multiple layers to be trained, or
a combination thereof.

6.  The apparatus of claim 1, wherein the at least one processor and the memory are further configured to:
receive a training command in a wireless message, wherein the UE applies the configuration to train the neural network at the UE in response to receiving the training command.

7.  The apparatus of claim 6, wherein the training command is a group common command, and the group common command is received over a group common downlink control information, DCI.

8.  The apparatus of claim 6, wherein the memory and the at least one processor are further configured to:
apply the configuration to train one or more neural networks identified in the training command.

9.  The apparatus of claim 6, wherein the memory and the at least one processor are configured to receive training command in a first frequency range or a first frequency band and to train the neural network on a second frequency range or a second frequency band.

10. The apparatus of claim 6, wherein the memory and the at least one processor are configured to receive the training command in a first component carrier and to train the neural network on a second component carrier.

11. The apparatus of claim 1, wherein the configuration indicates a period of time associated with the training the neural network.

12. The apparatus of claim 11, wherein

the configuration indicates an action for the UE to perform when the period of time expires; and
the action includes at least one of:

cease training the neural network,
freeze layers of the neural network, or
resume training of one or more layers of the neural network.

13. A method of wireless communication at a user equipment, UE, the method comprising:

receiving (1302) a configuration from a wireless network entity for one or more neural network training parameters for wireless communication by the UE, wherein the one or more neural network training parameters comprise a subset of layers to be trained; and
training (1306) the neural network based on the configuration received from the wireless network entity.

14. An apparatus for wireless communication, the apparatus comprising:

a memory; and
at least one processor coupled to the memory, the at least one processor and the memory configured to:

detect (1502) one or more parameters for neural network training for wireless communication by a user equipment, UE, wherein the one or more neural network training parameters comprise a subset of layers to be trained; and
transmit (1504), to the UE, a configuration for the one or more neural network training parameters for the wireless communication by the UE.

15. A method of wireless communication at a base station, the method comprising:

detecting (1502) one or more parameters for neural network training for wireless communication by a user equipment, UE, wherein the one or more neural network training parameters comprise a subset of layers to be trained; and

transmitting (1504), to the UE, a configuration for the one or more neural network training parameters for the wireless communication by the UE.

**Patentansprüche**

1. Eine Vorrichtung für Drahtloskommunikation an einer Nutzereinrichtung bzw. UE (UE = user equipment), wobei die Vorrichtung Folgendes aufweist:

    einen Speicher; und
    wenigstens einen Prozessor, der an den Speicher gekoppelt ist, wobei der wenigstens eine Prozessor und der Speicher konfiguriert sind zum:

    Empfangen (1302) einer Konfiguration von einer Drahtlosnetzwerkeinheit für einen oder mehrere Trainingsparameter eines neuronalen Netzwerks für Drahtloskommunikation durch die UE, wobei der eine oder die mehreren Trainingsparameter des neuronalen Netzwerks einen Subsatz von Schichten, die trainiert werden sollen, aufweisen; und
    Trainieren (1306) des neuronalen Netzwerks basierend auf der Konfiguration, die von der Drahtlosnetzwerkeinheit empfangen wird.

2. Vorrichtung nach Anspruch 1, wobei das neuronale Netzwerk zum Durchführen von wenigstens einem von Folgendem trainiert wird:

    Drahtloskanalkomprimierung an der UE,
    Drahtloskanalmessung an der UE,
    Drahtlosinterferenzmessung an der UE,
    UE-Positionsbestimmung, oder
    Drahtloswellenformbestimmung an der UE.

3. Vorrichtung nach Anspruch 1, wobei die Konfiguration des einen oder der mehreren Trainingsparameter des neuronalen Netzwerks in wenigstens einem von Folgendem empfangen wird:

    Signalisierung einer höheren Schicht,
    Funkressourcensteuerungs- bzw. RRC-Signalisierung (RRC = radio resource control),
    einem Medienzugriffssteuerungs-Steuerelement bzw. MAC-CE (MAC = medium access control, CE = control element),
    Abwärtsstreckensteuerinformation bzw. DCI (DCI = downlink control information),
    Sidelink-Steuerinformation bzw. SCI (SCI = sidelink control information), oder einer Sidelink-Nachricht.

4. Vorrichtung nach Anspruch 3, wobei, zum Empfangen der Konfiguration, der wenigstens eine Prozessor und der Speicher konfiguriert sind zum:

    Empfangen mehrerer Sätze von Trainingsparametern des neuronalen Netzwerks in der Signalisierung der höheren Schicht; und
    Empfangen einer Anzeige von einem der mehreren Sätze von Trainingsparametern des neuronalen Netzwerks in wenigstens einem von dem MAC-CE, der DCI oder einer Kombination davon.

5. Vorrichtung nach Anspruch 1, wobei der eine oder die mehreren Trainingsparameter des neuronalen Netzwerks wenigstens eines von Folgendem aufweisen:

    einen Kanalzustandsinformationsberichterstattungsidentifikator,
    einen Kanalzustandsreferenzsignalidentifikator,
    einen Komponententrägeridentifikator,
    einen Bandbreiteabschnitt- bzw. BWP-Identifikator (BWP = bandwidth part),
    einen Identifikator eines neuronalen Netzwerks,
    eine erste Anzeige wenigstens einer Schicht, die trainiert werden soll,
    eine zweite Anzeige wenigstens einer Schicht, die eingefroren werden soll,
    eine Gruppe mehrerer Schichten, die trainiert werden sollen, oder

eine Kombination davon.

6. Vorrichtung nach Anspruch 1, wobei der wenigstens eine Prozessor und der Speicher weiter konfiguriert sind zum: Empfangen eines Trainingsbefehls innerhalb einer Drahtlosnachricht, wobei die UE die Konfiguration anwendet zum Trainieren des neuronalen Netzwerks an der UE ansprechend auf Empfangen des Trainingsbefehls.

7. Vorrichtung nach Anspruch 6, wobei der Trainingsbefehl ein für eine Gruppe gemeinsamer Befehl ist, und der für die Gruppe gemeinsame Befehl über für eine Gruppe gemeinsame Abwärtsstreckensteuerinformation bzw. DCI empfangen wird.

8. Vorrichtung nach Anspruch 6, wobei der Speicher und der wenigstens eine Prozessor weiter konfiguriert sind zum: Anwenden der Konfiguration zum Trainieren von einem oder mehreren neuronalen Netzwerken, die in dem Trainingsbefehl identifiziert werden.

9. Vorrichtung nach Anspruch 6, wobei der Speicher und der wenigstens eine Prozessor konfiguriert sind zum Empfangen eines Trainingsbefehls in einem ersten Frequenzbereich oder einem ersten Frequenzband und zum Trainieren des neuronalen Netzwerks auf einem zweiten Frequenzbereich oder einem zweiten Frequenzband.

10. Vorrichtung nach Anspruch 6, wobei der Speicher und der wenigstens eine Prozessor konfiguriert sind zum Empfangen des Trainingsbefehls in einem ersten Komponententräger und zum Trainieren des neuronalen Netzwerks auf einem zweiten Komponententräger.

11. Vorrichtung nach Anspruch 1, wobei die Konfiguration eine Zeitperiode anzeigt, die mit dem Trainieren des neuronalen Netzwerks assoziiert ist.

12. Vorrichtung nach Anspruch 11, wobei

die Konfiguration eine Aktion für die UE anzeigt, die durchgeführt werden soll, wenn die Zeitperiode abläuft; und die Aktion wenigstens eines von Folgendem aufweist:

Beenden des Trainierens des neuronalen Netzwerks, Einfrieren von Schichten des neuronalen Netzwerks, oder Wiederaufnehmen des Trainierens von einer oder mehreren Schichten des neuronalen Netzwerks.

13. Ein Verfahren für Drahtloskommunikation an einer Nutzereinrichtung bzw. UE (UE = user equipment), wobei das Verfahren Folgendes aufweist:

Empfangen (1302) einer Konfiguration von einer Netzwerkeinheit für einen oder mehrere Trainingsparameter eines neuronalen Netzwerks für Drahtloskommunikation durch die UE, wobei der eine oder die mehreren Trainingsparameter des neuronalen Netzwerks einen Subsatz von Schichten, die trainiert werden sollen, aufweisen; und Trainieren (1306) des neuronalen Netzwerks basierend auf der Konfiguration, die von der Drahtlosnetzwerkeinheit empfangen wird.

14. Eine Vorrichtung für Drahtloskommunikation, wobei die Vorrichtung Folgendes aufweist:

einen Speicher; und wenigstens einen Prozessor, der an den Speicher gekoppelt ist, wobei der wenigstens eine Prozessor und der Speicher konfiguriert sind zum:

Detektieren (1502) von einem oder mehreren Parametern zum Trainieren eines neuronalen Netzwerks für Drahtloskommunikation durch eine Nutzereinrichtung bzw. UE (UE = user equipment), wobei der eine oder die mehreren Trainingsparameter des neuronalen Netzwerks einen Subsatz von Schichten aufweisen, die trainiert werden sollen; und Senden (1504), an die UE, einer Konfiguration für den einen oder die mehreren Trainingsparameter des neuronalen Netzwerks für die Drahtloskommunikation durch die UE.

15. Ein Verfahren für Drahtloskommunikation an einer Basisstation, wobei das Verfahren Folgendes aufweist:

Detektieren (1502) von einem oder mehreren Parametern zum Trainieren eines neuronalen Netzwerks für Drahtloskommunikation durch eine Nutzereinrichtung bzw. UE (UE = user equipment), wobei der eine oder die mehreren Trainingsparameter des neuronalen Netzwerks einen Subsatz von Schichten aufweisen, die trainiert werden sollen; und

Senden (1504), an die UE, einer Konfiguration für den einen oder die mehreren Trainingsparameter des neuronalen Netzwerks für die Drahtloskommunikation durch die UE.

**Revendications**

1. Appareil de communication sans fil au niveau d'un équipement utilisateur, UE, l'appareil comprenant :

   une mémoire ; et
   au moins un processeur couplé à la mémoire, le ou les processeurs et la mémoire étant configurés pour :
   recevoir (1302) une configuration d'une entité de réseau sans fil pour un ou plusieurs paramètres d'entraînement de réseau neuronal pour la communication sans fil par l'UE, le ou les paramètres d'entraînement de réseau neuronal comprenant un sous-ensemble de couches à être entraîné ; et
   entraîner (1306) le réseau neuronal sur la base de la configuration reçue de l'entité de réseau sans fil.

2. Appareil selon la revendication 1, dans lequel le réseau neuronal est entraîné pour effectuer au moins l'une des opérations suivantes :

   compression de canal sans fil au niveau de l'UE, mesure de canal sans fil au niveau de l'UE,
   mesure d'interférence sans fil au niveau de l'UE,
   positionnement de l'UE ou
   détermination de forme d'onde sans fil au niveau de l'UE.

3. Appareil selon la revendication 1, dans lequel la configuration du ou des paramètres d'entraînement du réseau neuronal est reçue dans au moins l'un des suivants :

   la signalisation de couche supérieure,
   la signalisation de contrôle de ressources radio, RRC,
   un élément de contrôle, CE, de contrôle d'accès au support, MAC, MAC-CE,
   des informations de contrôle de liaison descendante, DCI,
   des informations de contrôle de liaison latérale, SCI, ou
   un message de liaison latérale.

4. Appareil selon la revendication 3, dans lequel, pour recevoir la configuration, le ou les processeurs et la mémoire sont configurés pour :

   recevoir plusieurs ensembles de paramètres d'entraînement de réseau neuronal dans la signalisation de couche supérieure ; et
   recevoir une indication de l'un des multiples ensembles de paramètres d'entraînement du réseau neuronal dans au moins l'un parmi un MAC-CE, un DCI ou une combinaison de ceux-ci.

5. Appareil selon la revendication 1, dans lequel le ou les paramètres d'entraînement du réseau neuronal comprennent au moins l'un des éléments suivants :

   un identifiant de rapport d'informations d'état de canal,
   un identifiant de signal de référence d'état de canal,
   un identifiant de porteuse de composant,
   un identifiant de partie de bande passante, BWP,
   un identifiant de réseau neuronal,
   une première indication d'au moins une couche à être entraîné,
   une seconde indication d'au moins une couche à geler,
   un groupe de couches multiples à être entraîné, ou
   une combinaison de ceux-ci.

**6.** Appareil selon la revendication 1, dans lequel le ou les processeurs et la mémoire sont en outre configurés pour : recevoir une commande d'entraînement dans un message sans fil, l'UE appliquant la configuration pour entraîner le réseau neuronal au niveau de l'UE en réponse à la réception de la commande d'entraînement.

**7.** Appareil selon la revendication 6, dans lequel la commande d'entraînement est une commande commune de groupe, et la commande commune de groupe est reçue sur une information de contrôle de liaison descendante commune de groupe, DCI.

**8.** Appareil selon la revendication 6, dans lequel la mémoire et le ou les processeurs sont en outre configurés pour : appliquer la configuration pour entraîner un ou plusieurs réseaux neuronaux identifiés dans la commande d'entraînement.

**9.** Appareil selon la revendication 6, dans lequel la mémoire et le ou les processeurs sont configurés pour recevoir une commande d'entraînement dans une première plage de fréquences ou une première bande de fréquences et pour entraîner le réseau neuronal sur une seconde plage de fréquences ou une seconde bande de fréquences.

**10.** Appareil selon la revendication 6, dans lequel la mémoire et le ou les processeurs sont configurés pour recevoir la commande d'entraînement dans une première porteuse composante et pour entraîner le réseau neuronal sur une seconde porteuse composante.

**11.** Appareil selon la revendication 1, dans lequel la configuration indique une période de temps associée à l'entraînement du réseau neuronal.

**12.** Appareil selon la revendication 11, dans lequel

la configuration indique une action que l'UE doit effectuer lorsque la période de temps expire ; et
l'action comprend au moins l'une des actions suivantes :

cesser l'entraînement du réseau neuronal,
geler des couches du réseau neuronal ou
reprendre l'entraînement d'une ou plusieurs couches du réseau neuronal.

**13.** Procédé de communication sans fil au niveau d'un équipement utilisateur, UE, le procédé comprenant :

la réception (1302) d'une configuration provenant d'une entité de réseau sans fil pour un ou plusieurs paramètres d'entraînement de réseau neuronal pour la communication sans fil par l'UE, le ou les paramètres d'entraînement de réseau neuronal comprenant un sous-ensemble de couches à entraîner ; et
l'entraînement (1306) du réseau neuronal sur la base de la configuration reçue de l'entité de réseau sans fil.

**14.** Appareil de communication sans fil, l'appareil comprenant :

une mémoire ; et
au moins un processeur couplé à la mémoire, le ou les processeurs et la mémoire étant configurés pour :

détecter (1502) un ou plusieurs paramètres pour l'entraînement d'un réseau neuronal pour la communication sans fil par un équipement utilisateur, UE, le ou les paramètres d'entraînement du réseau neuronal comprenant un sous-ensemble de couches à être entraîné ; et
transmettre (1504), à l'UE, une configuration pour le ou les paramètres d'entraînement du réseau neuronal pour la communication sans fil par l'UE.

**15.** Procédé de communication sans fil au niveau d'une station de base, le procédé comprenant les étapes consistant à :

détecter (1502) un ou plusieurs paramètres pour l'entraînement d'un réseau neuronal pour la communication sans fil par un équipement utilisateur, UE, le ou les paramètres d'entraînement du réseau neuronal comprenant un sous-ensemble de couches à être entraîné ; et
transmettre (1504), à l'UE, une configuration pour le ou les paramètres d'entraînement du réseau neuronal pour la communication sans fil par l'UE.

**FIG. 1**

FIG. 2A

FIG. 2B

FIG. 2C

FIG. 2D

**FIG. 3**

EP 4 201 035 B1

FIG. 4A

FIG. 4B

500

Convolution 2x2 (3,3)

Flatten

Fully Connected 4096xM

Fully Connected Mx4096

502

Reshape

RefineNet

550

Convolution 2x8 (3,3)

Convolution 8x16 (3,3)

Convolution 16x2 (3,3)

RefineNet

Convolution 2x2 (3,3)

**FIG. 5**

**FIG. 6**

700

```
        ●                                      ●
        │                                      ▲
        ▼                                      │
┌─────────────────────┐            ┌─────────────────────┐
│ Convolution 2d 64x128│           │ Convolution 2d 128x64│
│      (3,1)          │            │      (3,1)          │
└─────────────────────┘            └─────────────────────┘
        │                                      ▲
        ▼                                      │
┌─────────────────────┐            ┌─────────────────────┐
│   ResNet (128)      │            │   ResNet (128)      │
└─────────────────────┘            └─────────────────────┘
        │                                      ▲
        ▼                                      │
┌─────────────────────┐            ┌─────────────────────┐
│   ResNet (128)      │            │   ResNet (128)      │
└─────────────────────┘            └─────────────────────┘
        │                                      ▲
        ▼                                      │
┌─────────────────────┐            ┌─────────────────────┐
│ Convolution2d 128xV │            │ Convolution2d Vx128 │
│      (1,1)          │            │      (1,1)          │
└─────────────────────┘            └─────────────────────┘
        │                                      ▲
        ▼                                      │
┌─────────────────────┐            ┌─────────────────────┐
│Convolution 2d 4x8 (3,1)│          │Convolution 2d 8x4 (3,1)│
└─────────────────────┘            └─────────────────────┘
        │                                      ▲
        ▼                                      │
┌─────────────────────┐            ┌─────────────────────┐
│   ResNet (8)        │            │   ResNet (8)        │
└─────────────────────┘            └─────────────────────┘
        │                                      ▲
        ▼                                      │
┌─────────────────────┐            ┌─────────────────────┐
│   ResNet (8)        │            │   ResNet (8)        │
└─────────────────────┘            └─────────────────────┘
        │                                      ▲
        ▼                                      │
┌─────────────────────┐            ┌─────────────────────┐
│Convolution2d 8xU (1,1)│           │Convolution2d 8xU (1,1)│
└─────────────────────┘            └─────────────────────┘
        │                                      ▲
        ▼                                      │
┌─────────────────────┐            ┌─────────────────────┐
│     Flatten         │            │     Reshape         │
└─────────────────────┘            └─────────────────────┘
        │                                      ▲
        ▼                                      │
┌─────────────────────┐            ┌─────────────────────┐
│  Fully Connected    │            │  Fully Connected    │
│     64UVxM          │            │     Mx64UV          │
└─────────────────────┘            └─────────────────────┘
        │                                      ▲
        │         ┌─────────────────────┐      │
        └────────▶│   Quantization      │─────┘
                  └─────────────────────┘
```

# FIG. 7

**800**

## FIG. 8

900

910 — Encode a data set using one or more extraction operations and compression operations associated with a neural network, the one or more extraction operations and compression operations being based at least in part on a set of features of the data set to produce a compressed data set

920 — Transmit the compressed data set to a second device

# FIG. 9

EP 4 201 035 B1

1000

1010 — | Receive, from a first device, a compressed data set |

1020 — | Decode the compressed data set using one or more decompression operations and reconstruction operations associated with a neural network, the one or more decompression and reconstruction operations being based at least in part on a set of features of the compressed data set to produce a reconstructed data set |

# FIG. 10

EP 4 201 035 B1

**1100**

**1102**

UE

**1104**

Network entity

**1106**

detect one or more NN training parameters

**1108b**

RRC / MAC-CE / DCI / SCI configuration for NN training parameters

**1108a**

**neural network training parameter:**

- a channel state information reporting identifier
- a channel state reference signal identifier
- a component carrier identifier
- a bandwidth part (BWP) identifier
- a neural network identifier
- a first indication of at least one layer to be trained
- a second indication of at least one layer to be frozen
- a group of multiple layers to be trained
- a subset of layers to be trained

**1110**

training command

train the neural network according to configuration **1112**

cease training, freeze layers, or resume training of NN when a period of time expires **1114**

periodically, semi-persistently, or aperiodically train NN based on a period of time **1116**

# FIG. 11

EP 4 201 035 B1

1200

1202

receive configuration for NN training parameter

1204

receive training command

1206

train the neural network according to configuration

1208

cease training, freeze layers, or resume training of NN when period of time expires

1210

periodically, semi-persistently, or aperiodically train NN based on a period of time

# FIG. 12

**1300**

**1302**

| receive configuration for NN training parameter |
|---|

**1306**

| train the neural network according to configuration |
|---|

**FIG. 13**

EP 4 201 035 B1

EP 4 201 035 B1

**1400**

**1402**

```
┌─────────────────────────────────────────────────────┐
│       determine one or more NN training parameters    │
└─────────────────────────────────────────────────────┘
```

**1404**

```
┌─────────────────────────────────────────────────────┐
│       transmit configuration for NN training parameter │
└─────────────────────────────────────────────────────┘
```

**1406**

```
┌─────────────────────────────────────────────────────┐
│              transmit training command                │
└─────────────────────────────────────────────────────┘
```

**FIG. 14**

1500

EP 4 201 035 B1

1502

determine one or more NN training parameters

1504

transmit configuration for NN training parameter

**FIG. 15**

**FIG. 16**

EP 4 201 035 B1

1700

1702

**Reception Component**
**1730**

**Neural Network Training Configuration Component**
**1740**

**Cellular RF Transceiver**
**1722**

104

**Communication Manager 1732**

**Transmission Component**
**1734**

**Baseband Unit 1704**

**FIG. 17**

**EP 4 201 035 B1**

## REFERENCES CITED IN THE DESCRIPTION

**Patent documents cited in the description**

- EP 3418821 A1